(19) Europäisches Patentamt
European Patent Office
Office européen des brevets

(11) **EP 4 002 198 B1**

(12) **EUROPEAN PATENT SPECIFICATION**

(45) Date of publication and mention
of the grant of the patent:
**08.10.2025 Bulletin 2025/41**

(21) Application number: **20905369.3**

(22) Date of filing: **15.10.2020**

(51) International Patent Classification (IPC):
*G06V 10/82* (2022.01)      *G06V 40/10* (2022.01)
*G06N 3/045* (2023.01)      *G06N 3/08* (2023.01)
*G06T 7/246* (2017.01)      *G06T 7/73* (2017.01)

(52) Cooperative Patent Classification (CPC):
**G06V 10/82; G06N 3/045; G06N 3/08; G06T 7/251;
G06T 7/73; G06T 7/75; G06V 40/103;**
G06T 2207/10016; G06T 2207/20076;
G06T 2207/20081; G06T 2207/20084;
G06T 2207/30196

(86) International application number:
**PCT/CN2020/121200**

(87) International publication number:
**WO 2021/129064 (01.07.2021 Gazette 2021/26)**

(54) **POSTURE ACQUISITION METHOD AND DEVICE, AND KEY POINT COORDINATE POSITIONING MODEL TRAINING METHOD AND DEVICE**

VERFAHREN UND VORRICHTUNG ZUR HALTUNGSERFASSUNG UND VERFAHREN UND VORRICHTUNG ZUM TRAINIEREN EINES MODELLS ZUR POSITIONIERUNG VON SCHLÜSSELPUNKTKOORDINATEN

PROCÉDÉ ET DISPOSITIF D'ACQUISITION DE POSTURE, ET PROCÉDÉ ET DISPOSITIF DE FORMATION DE MODÈLE DE POSITIONNEMENT DE COORDONNÉES DE POINT CLÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2019 CN 201911348014**

(43) Date of publication of application:
**25.05.2022 Bulletin 2022/21**

(73) Proprietor: **Tencent Technology (Shenzhen)
Company Limited
Shenzhen, Guangdong, 518057 (CN)**

(72) Inventors:
• **YANG, Bo**
  **Shenzhen, Guangdong 518057 (CN)**
• **WANG, Bo**
  **Shenzhen, Guangdong 518057 (CN)**
• **CHENG, Yu**
  **Shenzhen, Guangdong 518057 (CN)**
• **CHEN, Minghui**
  **Shenzhen, Guangdong 518057 (CN)**

(74) Representative: **Novagraaf International SA
Chemin de l'Echo 3
1213 Onex, Geneva (CH)**

(56) References cited:
CN-A- 106 503 682      CN-A- 107 103 733
CN-A- 110 334 587      CN-A- 110 348 412
CN-A- 110 458 046      CN-A- 111 126 272
US-A1- 2019 213 388      US-A1- 2019 278 983

• CHENG YU ET AL: "Occlusion-Aware Networks
for 3D Human Pose Estimation in Video", 2019
IEEE/CVF INTERNATIONAL CONFERENCE ON
COMPUTER VISION (ICCV), IEEE, 27 October
2019 (2019-10-27), pages 723 - 732,
XP033723978, DOI: 10.1109/ICCV.2019.00081

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- SONG JIE ET AL: "Thin-Slicing Network: A Deep Structured Model for Pose Estimation in Videos", 2017 IEEE CONFERENCE ON COMPUTER VISION AND PATTERN RECOGNITION (CVPR), IEEE COMPUTER SOCIETY, US, 21 July 2017 (2017-07-21), pages 5563 - 5572, XP033249916, ISSN: 1063-6919, [retrieved on 20171106], DOI: 10.1109/CVPR.2017.590
- MEHTA DUSHYANT ET AL: "Monocular 3D Human Pose Estimation in the Wild Using Improved CNN Supervision", 2017 INTERNATIONAL CONFERENCE ON 3D VISION (3DV), IEEE, 10 October 2017 (2017-10-10), pages 506 - 516, XP033353257, DOI: 10.1109/3DV.2017.00064
- YU CHENG ET AL: "3D Human Pose Estimation using Spatio-Temporal Networks with Explicit Occlusion Training", ARXIV.ORG, CORNELL UNIVERSITY LIBRARY, 201 OLIN LIBRARY CORNELL UNIVERSITY ITHACA, NY 14853, 7 April 2020 (2020-04-07), XP081652569
- FENG LONGFEI: "Research on 3D Facial Landmark Detection Method Based on Deep Learning", INFORMATION SCIENCE AND TECHNOLOGY, CHINESE MASTER'S THESES FULL-TEXT DATABASE, 1 January 2019 (2019-01-01), XP055824081

## Description

This application claims priority to Chinese Patent Application No. 201911348014.1, entitled "POSTURE ACQUISITION METHOD AND DEVICE, AND KEY POINT COORDINATE POSITIONING MODEL TRAINING METHOD AND DEVICE" filed on December 24, 2019.

## FIELD OF THE TECHNOLOGY

Embodiments of the present disclosure relate to the technical field of artificial intelligence, and in particular, to a pose acquisition method and a method and apparatus for training a key point coordinate positioning model.

## BACKGROUND OF THE DISCLOSURE

In the field of artificial intelligence, with the development of computer technologies, the production of games, animations and so on no longer relies on hand-drawn drawings, but may be based on some particular poses acquired from pictures by means of some devices.

In a related technology, pose acquisition may include the following steps: first, acquiring a picture including a target object (such as a human body); then, detecting the target object in the picture to acquire a region including the target object; then, predicting two-dimensional coordinates of key points of the target object based on the region of the target object; and finally, inputting the two-dimensional coordinates of the key points to a pose acquisition model to acquire a pose of the target object in the picture.

CHENG YU ET AL: "Occlusion-Aware Networks for 3D Human Pose Estimation in Video", discloses an occlusion-aware deep learning framework for estimating 3D human poses from a single video. The deep learning framework includes a human detector, such as Mask RCNN which normalizes each detected human bounding box to a fixed size while keeping the width/height ratio, a stacked hourglass network, which estimates the 2D keypoints in the form of heatmaps, a 2D TCN which improves the accuracy of the estimated 2D keypoints, and a 3D TCN which obtains the final 3D pose.

SONG JIE ET AL: "Thin-Slicing Network: A Deep Structured Model for Pose Estimation in Videos" discloses a deep structured model for pose estimation in videos. The Deep Structured Model includes: a spatial fully ConvNet which regresses joint confidence maps of joint positions for each input frame, a flow warping layer which warps the body part heat-maps via dense optical flow so that they align with its neighboring frame, and the spatio-temporal inference layer which processes both the warped and the current frame heat-maps to conduct inference between body parts spatially and temporally, to produce the final joint position estimates.

MEHTA DUSHYANT ET AL: "Monocular 3D Human Pose Estimation in the Wild Using Improved CNN Supervision" discloses a CNN-based approach for 3D human body pose estimation from single RGB images, including a 2DPoseNet to produce 2D joint location heatmaps, a 3D pose CNN used to regress a root-centered 3D pose from a cropped RGB image and makes use of new CNN supervision techniques.

Since sizes and poses of the target object may vary in different pictures, if the pose is acquired based on the predicted two-dimensional coordinates of the key points in the related technology, the pose finally acquired may be inaccurate due to inaccuracy of predicted positions of the key points.

## SUMMARY

The embodiments of the present disclosure provide a pose acquisition method and a method and apparatus for training a key point coordinate positioning model, which can improve the accuracy of predicted positions of key points, thereby improving the accuracy of a finally acquired pose. The technical solutions are as follows.

In one aspect, the embodiments of the present disclosure provide a pose acquisition method, applied to a computer device, the method including:

acquiring a target video;

acquiring, for an $i^{th}$ image frame in the target video, a first heat map of the $i^{th}$ image frame, the first heat map of the $i^{th}$ image frame including multiple second heat maps each for one of multiple key points, the key points corresponding to a target object in the $i^{th}$ image frame, a value of a pixel in the first heat map indicating a probability that the pixel is a key point, i being a positive integer;

obtaining three-dimensional coordinates of the key points in the $i^{th}$ image frame according to the first heat map of the $i^{th}$ image frame and a first heat map of an adjacent image frame by using a key point coordinate positioning model; and

acquiring a target pose of the target object according to the three-dimensional coordinates of the key points in the $i^{th}$ image frame, the target pose being a pose of the target object in the $i^{th}$ image frame, where

the key point coordinate positioning model includes a heat map encoding model and a temporal multi-scale model, the heat map encoding model includes at least one convolutional layer and at least one fully convolutional layer, the temporal multi-scale model includes at least one convolutional layer and at least one fully connected layer, and

the obtaining three-dimensional coordinates of the key points in the ith image frame according to the first heat map of the ith image frame and a first heat map of an adjacent image frame includes:

inputting the first heat map of the ith image frame and the first heat map of the adjacent image frame into the heat map encoding model to acquire the heat map code of the ith image frame and the heat map code of the adjacent image frame; and

inputting the heat map code of the ith image frame and the heat map code of the adjacent image frame into the temporal multi-scale model to acquire the three-dimensional coordinates of the key points in the ith image frame.

In another aspect, the embodiments of the present disclosure provide a method for training a key point coordinate positioning model, applicable to a computer device, the method including:

acquiring at least one set of training samples, each of the at least one set of training samples including a sample video and real two-dimensional coordinates and real three-dimensional coordinates of key points of a sample object in the sample video;

detecting and tracking the sample object in the sample video;

for each sample image frame in the sample video, acquiring a first heat map of the sample image frame in the sample video, the first heat map of the sample image frame including multiple second heat maps each for one of multiple key points, the key points corresponding to the sample object in the sample image frame, a pixel value of a pixel in the first heat map indicating a probability that the pixel is a key point;

training the key point coordinate positioning model by using the first heat map of each sample image frame and the real two-dimensional coordinates and the real three-dimensional coordinates of the key points, the key point coordinate positioning model being configured to determine predicted three-dimensional coordinates of key points in a target sample image frame according to a first heat map of the target sample image frame and a first heat map of an adjacent sample image frame; and

stopping training the key point coordinate positioning model in a case that a training stop condition is satisfied, to obtain a trained key point coordinate positioning model, where

the key point coordinate positioning model includes a heat map encoding model and a temporal multi-scale model,

the heat map encoding model includes at least one convolutional layer and at least one fully convolutional layer, and is configured to process the first heat map of the target sample image frame and the first heat map of the adjacent image frame to obtain a heat map code of the target sample image frame and a heat map code of the adjacent image frame, and

the temporal multi-scale model includes at least one convolutional layer and at least one fully connected layer, and is configured to process the heat map code of the target sample image frame and the heat map code of the adjacent image frame to obtain the three-dimensional coordinates of the key points in the target sample image frame.

In yet another aspect, the embodiments of the present disclosure provide a pose acquisition apparatus, including:

a video acquisition module configured to acquire a target video;

a heat map acquisition module configured to acquire, for an $i^{th}$ image frame in the target video, a first heat map of the $i^{th}$ image frame, the first heat map of the $i^{th}$ image frame including multiple second heat maps each for one of multiple key points, the key points corresponding to a target object in the $i^{th}$ image frame, a value of a pixel in the first heat map indicating a probability that the pixel is a key point, i being a positive integer;

a coordinate acquisition module configured to obtain three-dimensional coordinates of the key points in the $i^{th}$ image frame according to the first heat map of the $i^{th}$ image frame and a first heat map of an adjacent image frame by using a key point coordinate positioning model; and

a pose acquisition module configured to acquire a target pose of the target object according to the three-dimensional coordinates of the key points in the $i^{th}$ image frame, the target pose being a pose of the target object in the $i^{th}$ image frame, where

the key point coordinate positioning model includes a heat map encoding model and a temporal multi-scale model, the heat map encoding model includes at least one convolutional layer and at least one fully convolutional layer, the temporal multi-scale model includes at least one convolutional layer and at least one fully connected layer, and

the coordinate acquisition module is further configured to

input the first heat map of the ith image frame and the first heat map of the adjacent image frame into the heat map encoding model to acquire the heat map code of the ith image frame and the heat map code of the adjacent image frame; and

input the heat map code of the ith image frame and the heat map code of the adjacent image frame into the temporal multi-scale model to acquire the three-dimensional coordinates of the key points in the ith image frame.

In still another aspect, the embodiments of the present disclosure provide an apparatus for training a key point coordinate positioning model, including:

a sample acquisition module configured to acquire at least one set of training samples, each of the at least one set of training samples including a sample video and real two-dimensional coordinates and real three-dimensional coordinates of key points of a sample object in the sample video;

an object detection module configured to detect and track the sample object in the sample video;

a heat map acquisition module configured to, for each sample image frame in the sample video, acquire a first heat map of the sample image frame, the first heat map of the sample image frame including multiple second heat maps each for one of multiple key points, the key points corresponding to the sample object in the sample image frame, a pixel value of a pixel in the first heat map indicating a probability that the pixel is a key point;

a model training module configured to train the key point coordinate positioning model by using the first heat map of each sample image frame and the real two-dimensional coordinates and the real three-dimensional coordinates of the key points, the key point coordinate positioning model being configured to determine predicted three-dimensional coordinates of key points in a target sample image frame according to a first heat map of the target sample image frame and a first heat map of an adjacent sample image frame; and

a training stop module configured to stop training the key point coordinate positioning model in a case that a training stop condition is satisfied, to obtain a trained key point coordinate positioning model, where

the key point coordinate positioning model includes a heat map encoding model and a temporal multi-scale model,

the heat map encoding model includes at least one convolutional layer and at least one fully convolutional layer, and is configured to process the first heat map of the target sample image frame and the first heat map of the adjacent image frame to obtain a heat map code of the target sample image frame and a heat map code of the adjacent image frame, and

the temporal multi-scale model includes at least one convolutional layer and at least one fully connected layer, and is configured to process the heat map code of the target sample image frame and the heat map code of the adjacent image frame to obtain the three-dimensional coordinates of the key points in the target sample image frame.

In a further aspect, the embodiments of the present disclosure provide a computer device, including a processor and a memory, the memory storing at least one instruction, at least one program, a code set or an instruction set, and the at least one instruction, the at least one program, the code set or the instruction set being loaded and executed by the processor to implement the pose acquisition method as described in the above aspect or implement the method for training a key point coordinate positioning model as described in the above aspect.

The computer device includes a terminal or a server.

In a further aspect, the embodiments of the present disclosure provide a computer-readable storage medium, storing at least one instruction, at least one program, a code set or an instruction set, and the at least one instruction, the at least one program, the code set or the instruction set being loaded and executed by a processor to implement the pose acquisition method as described in the above aspect or implement the method for training a key point coordinate positioning model as described in the above aspect.

In a further aspect, the embodiments of the present disclosure provide a computer program product or a computer program, the computer program product or the computer program including computer instructions stored in a computer-readable storage medium. A processor of a computer device reads the computer instructions from the computer-readable storage medium. The processor executes the computer instructions to cause the computer device to perform the pose acquisition method in any one of the above embodiments or implement the method for training a key point coordinate positioning model as described in the above aspect.

The technical solutions according to the embodiments of the present disclosure may include the following beneficial effects.

The second heat maps of the key points of the target object in the target video are acquired, and the target pose of the target object in the target image frame is acquired based on the first heat map of the target image frame and the first heat map of the adjacent image frame of the target image frame. In the related technology, the pose is directly acquired through the pose acquisition model after the two-dimensional coordinates of the key points of the target object are acquired from the picture. In contrast, in the technical solution according to the embodiments of the present disclosure, the pose is acquired based on the first heat map of the target image frame and the first heat map of the adjacent image frame of the target image frame, which can effectively overcome the problem of inaccurate prediction caused by different sizes and poses of the target object in different pictures, thereby improving the accuracy of predicted positions of the key points and further improving the accuracy of the acquired pose.

**BRIEF DESCRIPTION OF THE DRAWINGS**

To describe technical solutions in embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other drawings from these accompanying drawings without creative efforts.

FIG. 1 is a flowchart of a pose acquisition method according to an embodiment of the present disclosure.

FIG. 2 is a flowchart of a pose acquisition method according to an embodiment of the present disclosure.

FIG. 3 is a flowchart of a pose acquisition method according to another embodiment of the present disclosure.

FIG. 4 is a schematic diagram of a target region according to an embodiment of the present disclosure.

FIG. 5 is a schematic diagram of a first heat map according to an embodiment of the present disclosure.

FIG. 6 is a flowchart of a method for training a key point coordinate positioning model according to an embodiment of the present disclosure.

FIG. 7 is a block diagram of a pose acquisition apparatus according to an embodiment of the present disclosure.

FIG. 8 is a block diagram of a pose acquisition apparatus according to another embodiment of the present disclosure.

FIG. 9 is a block diagram of an apparatus for training a key point coordinate positioning model according to an embodiment of the present disclosure.

FIG. 10 is a block diagram of an apparatus for training a key point coordinate positioning model according to an embodiment of the present disclosure.

FIG. 11 is a structural block diagram of a terminal according to an embodiment of the present disclosure.

FIG. 12 is a schematic structural diagram of a server according to an embodiment of the present disclosure.

**DESCRIPTION OF EMBODIMENTS**

To make objectives, technical solutions, and advantages of the present disclosure clearer, the following further describes implementations of the present disclosure in detail with reference to the accompanying drawings.

Artificial Intelligence (AI) is a theory, method, technology, and application system that use a digital computer or a machine controlled by a digital computer to simulate, extend, and expand human intelligence, perceive the environment, obtain knowledge, and obtain an optimal result by using the knowledge. In other words, AI is a comprehensive technology of computer science, which attempts to understand essence of intelligence and produces a new intelligent machine that responds in a manner similar to human intelligence. AI is to study design principles and implementation methods of various intelligent machines, so that the machines have the functions of perception, reasoning, and decision-making.

The AI technology is a comprehensive discipline, covering a wide range of fields, and including both a hardware-level technology and a software-level technology. Basic AI technologies generally include technologies such as a sensor, a dedicated AI chip, cloud computing, distributed storage, a big data processing technology, an operation/interaction system, and mechatronics. AI software technologies mainly include several major directions including a computer vision technology, a speech processing technology, a natural language processing technology, and machine learning (ML)/deep learning.

The computer vision (CV) technology is a science that studies how to cause a machine to "see". To be more specific, CV performs recognition, tracking, and measurement on a target using a camera and a computer instead of human eyes, and further performs graphics processing, so that the computer processes the target into an image suitable for human eyes to observe, or an image suitable for being transmitted to an instrument for detection. As a scientific discipline, CV studies related theories and technologies and attempts to establish an AI system capable of obtaining information from images or multidimensional data. The CV technologies generally include technologies such as image processing, image recognition, image semantic understanding, image retrieval, optical character recognition (OCR), video processing, video semantic understanding, video content/behavior recognition, three-dimensional object reconstruction, a 3D technology, virtual reality, augmented reality, synchronous positioning, and map construction, and further include biometric feature recognition technologies such as common face recognition and fingerprint recognition.

ML is an interdisciplinarity, and relates to multiple disciplines such as a probability theory, statistics, an approximation theory, a convex analysis, and an algorithm complexity theory. ML specializes in studying how a computer simulates or implements a human learning behavior to obtain new knowledge or skills, and reorganize an existing knowledge structure, so as to keep improving its performance. ML is a core of the AI, is a basic way to make the computer intelligent, and is applied to various fields of the AI. ML and deep learning generally include technologies such as an artificial neural network, a belief network, reinforcement learning, transfer learning, inductive learning, and learning from demonstrations.

With the research and progress of the AI technology, the AI technology is studied and applied to multiple fields such as a common smart home, a smart wearable device, a virtual assistant, a smart speaker, smart marketing, unmanned driving, automatic driving, an unmanned aerial vehicle, a robot, smart medical care, and smart customer service. It is believed that with the development of technologies, the AI technology will be applied to more fields, and play an increasingly important role.

The solution according to the embodiments of the present disclosure involves technologies such as CV and ML of artificial intelligence, and provides a pose acquisition method. The pose acquisition method may be applied to the field of animation and game production, in which, for example, three-dimensional coordinates of key points of an object may be acquired from a video, and a pose is acquired based on the three-dimensional coordinates of the key points, where the pose may be used in animations and games. The pose acquisition method may also be applied to the field of analysis and research on movement disorders, such as the Parkinson's disease, and may also be applied to the field of gait analysis to analyze human motion in videos and improve performance.

In the method according to the embodiments of the present disclosure, the steps may be performed by a computer device. The computer device refers to an electronic device capable of computing, processing, and storing data, such as a Personal Computer (PC) or a server.

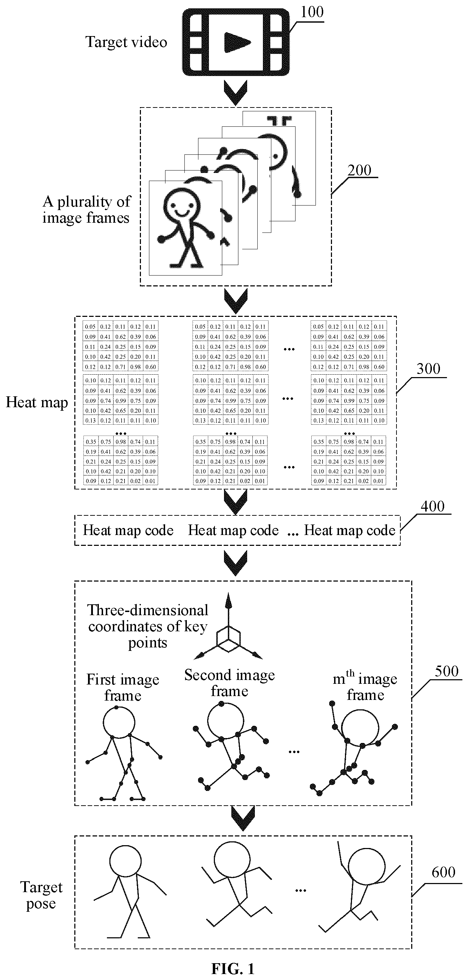

FIG. 1 is a flowchart of a pose acquisition method according to the present disclosure. First, the computer device acquires a target video 100. The target video includes multiple image frames 200. The computer device detects and tracks a target object in the target video 100. Then, for the image frames 200 in the target video 100, first heat maps 300 of the image frames 200 are acquired. The first heat maps 300 are used for indicating a probability that a pixel is a key point. Then, a heat map code 400 of a target image frame and a heat map code 400 of an adjacent image frame of the target image frame are acquired according to the first heat map 300 of the target image frame and the first heat map 300 of the adjacent image frame. Finally, three-dimensional coordinates 500 of key points in the target image frame are obtained according to the heat map code 400 of the target image frame and the heat map code 400 of the adjacent image frame, and a target pose 600 of the target object in the target image frame is acquired according to the three-dimensional coordinates 500 of the key points in the target image frame.

The technical solution of the present disclosure is described below by using several embodiments.

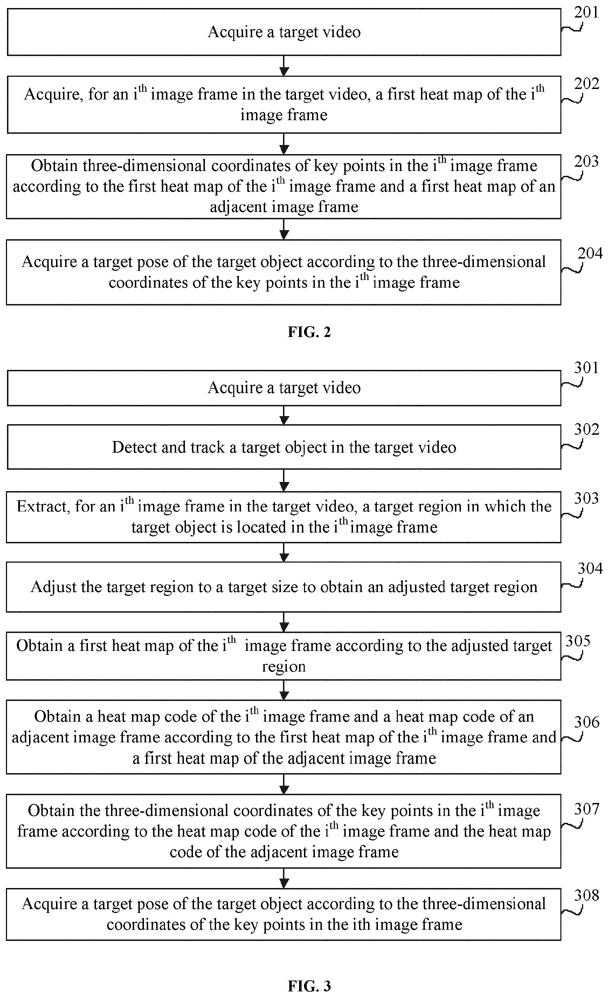

FIG. 2 is a flowchart of a pose acquisition method according to an embodiment of the present disclosure. This embodiment is mainly illustrated with an example in which the method is applied to the computer device introduced above. The method may include the following steps 201 to 204.

In step 201, a target video is acquired.

The computer device may acquire the target video. The target video includes multiple image frames.

Optionally, the target video is pre-stored by the computer device, or the target video is captured and then transmitted by another video capture device, or the target video is downloaded from a network, which is not limited in the embodiments of the present disclosure.

Optionally, the target video includes at least one of videos in forms of a TV drama, a movie, a short video, a video released on a social platform, a game video, and the like, which is not limited in the embodiments of the present disclosure.

In step 202, for an $i^{th}$ image frame in the target video, a first heat map of the $i^{th}$ image frame is acquired, i being a positive integer.

The target video includes multiple image frames. For each image frame in the target video, the computer device may acquire a first heat map of the image frame. For example, for an $i^{th}$ image frame in the target video, the computer device may acquire a first heat map of the $i^{th}$ image frame.

The first heat map of the $i^{th}$ image frame includes multiple second heat maps each for one of multiple key points, and the key points correspond to a target object in the $i^{th}$ image frame. Each key point has a second heat map. Taking a target key point as an example, a second heat map of the target key point indicates a probability that a pixel in the image frame is the target key point. The first heat map includes multiple pixels. Each pixel has a value. The value of the pixel in the first heat map indicates a probability that the pixel is a key point. A greater value of the pixel indicates a greater probability that the pixel is a key point. Conversely, a smaller value of the pixel indicates a smaller probability that the pixel is a key point.

The key points of the target object reflect key positions of a skeleton of the target object. For different target objects, positions and quantities of the key points are different. For example, in a case that the target object is a human body, the key points of the target object may be human joint positions including a top of a head, a neck, a right shoulder, a right elbow, a right wrist, a left shoulder, a left elbow, a left wrist, a buttock center, a right hip, a right knee, a right ankle, a left hip, a left knee, a left ankle, and a right heel. The above key points are connected to form a human skeleton. The human skeleton may characterizes a human pose.

Optionally, the target object in the target video may be detected and tracked before the first heat map of the $i^{th}$ image frame is acquired.

Optionally, the target video includes multiple objects. The target object is any one of the multiple objects. The target object may be a real person, a real animal, a character in a cartoon, an animal in a cartoon, or the like, which is not limited in the embodiments of the present disclosure.

In step 203, three-dimensional coordinates of the key points in the $i^{th}$ image frame are obtained according to the first heat map of the $i^{th}$ image frame and a first heat map of an adjacent image frame.

The adjacent image frame is an image frame adjacent to the $i^{th}$ image frame.

IThe three-dimensional coordinates of the key points in the $i^{th}$ image frame are obtained through a key point coordinate positioning model according to the first heat map of the $i^{th}$ image frame and the first heat map of the adjacent image frame of the $i^{th}$ image frame. The key point coordinate positioning model is a machine learning model learning a relationship between a first heat map of each sample image frame in a sample video and real three-dimensional coordinates of key points in the sample image frame. The key point coordinate positioning model includes a heat map encoding model and a temporal multi-scale model.

After a first heat map of each image frame in the target video is acquired, three-dimensional coordinates of key points in the image frame may be further acquired according to the first heat map of the image frame. In an embodiment of the present disclosure, for the $i^{th}$ image frame in the target video, the three-dimensional coordinates of the key points in the $i^{th}$ image frame may be obtained according to the first heat map of the $i^{th}$ image frame and the first heat map of the adjacent image frame of the $i^{th}$ image frame.

The adjacent image frame of the $i^{th}$ image frame is an image frame adjacent to the $i^{th}$ image frame (including being next to and near the $i^{th}$ image frame) among the image frames of the target video. For example, the adjacent image frame of the $i^{th}$ image frame includes an $(i-1)^{th}$ image frame, an $(i+1)^{th}$ image frame, an $(i-2)^{th}$ image frame, an $(i+2)^{th}$ image frame, ..., an $(i-k)^{th}$ image frame, and an $(i+k)^{th}$ image frame, where k is a positive integer.

In step 204, a target pose of the target object is acquired according to the three-dimensional coordinates of the key points in the $i^{th}$ image frame.

The target pose is a pose of the target object in the $i^{th}$ image frame.

For example, in a case that the target object is a real person, after the three-dimensional coordinates of the key points in the $i^{th}$ image frame are acquired, a three-dimensional human skeleton is determined based on the three-dimensional coordinates, and the target pose of the target object in the $i^{th}$ image frame may be further determined. The target pose includes at least one of walking, running, jumping, raising hands, and other poses, which is not limited in this embodiment of the present disclosure.

Based on the above, in the technical solution according to the embodiments of the present disclosure, the second heat maps of the key points of the target object in the target video are acquired, and the target pose of the target object in the target image frame is acquired based on the first heat map of the target image frame and the first heat map of the adjacent image frame of the target image frame. In the related technology, the pose is directly acquired through the pose acquisition model after the two-dimensional coordinates of the key points of the target object are acquired from the picture. In contrast, in the technical solution according to the embodiments of the present disclosure, the pose is acquired based on the first heat map of the target image frame and the first heat map of the adjacent image frame of the target image frame, which can effectively overcome the problem of inaccurate prediction caused by different sizes and poses of the target object in different pictures, thereby improving the accuracy of predicted positions of the key points and further improving the accuracy of the acquired pose.

FIG. 3 is a flowchart of a pose acquisition method according to another embodiment of the present disclosure. This embodiment is mainly illustrated with an example in which the method is applied to the computer device introduced above. The method may include the following steps 301 to 308.

In step 301, a target video is acquired.

This step is the same as or similar to step 201 in the embodiment of FIG. 2, which is not described in detail herein.

In step 302, a target object in the target video is detected and tracked.

Target detection is performed on each image frame in the target video, and a detected target object is tracked. Optionally, the target video includes multiple objects. The target object is any one of the multiple objects.

Optionally, target detection may be performed on the target video by using any target detection algorithm. For example, target detection may be performed by MaskRCNN. The MaskRCNN mainly includes two stages. In the first stage, an image is scanned and proposals are generated. The proposals refer to regions that may include a target object. Then, in the second stage, the proposals are classified, and bounding boxes of the regions of the target object and a high-quality segmentation mask are generated for each proposal to complete target detection.

Optionally, the target object may be tracked by using a PoseFlow algorithm. The PoseFlow algorithm may include pose flow builder and pose flow non-maximum suppression (Pose Flow-NMS). First, after objects in each image frame of the target video are detected, an intra-frame pose distance and an inter-frame pose distance are calculated. The intra-frame pose distance is used for measuring a similarity between two poses in the same image frame. The inter-frame pose distance is used for measuring a similarity between two poses in adjacent image frames. Then, a pose flow is built based on the intra-frame pose distance and the inter-frame pose distance. Afterwards, a pose flow distance between two pose flows is determined based on poses in the pose flow, and pose flow merging is performed to reduce redundant pose flows. Moreover, some disjoint pose flows are re-linked into a longer and complete pose flow until all pose flows are processed.

In step 303, for the $i^{th}$ image frame in the target video, a target region in which the target object is located in the $i^{th}$ image frame is extracted.

For the $i^{th}$ image frame in the target video, the target region in which the target object is located in the $i^{th}$ image frame may be extracted after the target object in the $i^{th}$ image frame is detected. Optionally, the target region may be a rectangular region.

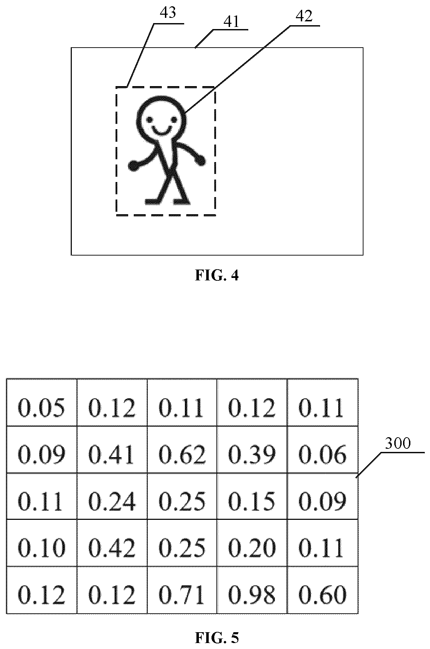

Illustratively, FIG. 4 is a schematic diagram of a target region. An $i^{th}$ image frame 41 includes a target object 42. The computer device extracts a target region 43 in which the target object 42 is located in the $i^{th}$ image frame 41.

Optionally, the extracting the target region in which the target object is located in the $i^{th}$ image frame may be performed by using a region extraction method such as a regional candidate network or a convolutional neural network, which is not limited in this embodiment of the present disclosure.

In step 304, the target region is adjusted to a target size to obtain an adjusted target region.

After the target region in which the target object is located in the $i^{th}$ image frame is extracted, the target region is adjusted to the target size to obtain the adjusted target region. The target size may be set by the computer device or preset by relevant personnel, which is not limited in this embodiment of the present disclosure.

Illustratively, for example, the target region is a rectangular region. After the rectangular region is extracted, the rectangular region may be enlarged to a square, where a side of the square has the same length as a longer side of the rectangular, and a center point of the rectangular serves as a center point of the square. Then, the square is scaled to a size of 256*256.

The target region is adjusted to the target size, so as to reduce the impact of a different in sizes of the target object in images on predicted positions of the key points and further improve the accuracy of the predicted positions of the key points.

In step 305, a first heat map of the $i^{th}$ image frame is obtained according to the adjusted target region.

After the adjusted target region is obtained, the first heat map of the $i^{th}$ image frame may be further obtained.

Optionally, a heat map prediction model is called, and the target region is inputted to the heat map prediction model to obtain the first heat map of the $i^{th}$ image frame. The heat map prediction model is configured to predict a second heat map of each key point in an image frame. The heat map prediction model may be a high resolution network (HRN) model, a key point regression model, or the like, which is not limited in the embodiments of the present disclosure. The HRN model is capable of maintaining a high-resolution representation throughout the process. Starting with a high resolution subnetwork as the first stage, more stages are formed by gradually adding high-to-low resolution subnetworks, and multi-resolution subnetworks are connected in parallel. Throughout the process, multi-scale repeated fusion is performed by repeatedly exchanging information on the parallel multi-resolution subnetworks, and a high-resolution representation, that is, a first heat map, is outputted via the network.

The first heat map of the $i^{th}$ image frame includes multiple second heat maps each for one of multiple key points of the target object in the $i^{th}$ image frame. Each second heat map characterizes a distribution probability of a corresponding key point. A value of a pixel in the first heat map indicates a probability that the pixel is the key point.

Values of pixels in the first heat map are within a value range of [0, 1], [0, +∞] or [-∞, +∞]. The value range of the pixel is not limited in the embodiments of the present disclosure, which may be adjusted according to an actual requirement.

In an example, the first heat map includes a pixel A and a pixel B. Values of the pixels in the first heat map are within the value range of [0, 1]. If the pixel A has a value of 0.98 and the pixel B has a value of 0.69, the pixel A is more likely to be a key point than the pixel B.

In another example, the pixels in the first heat map are within the value range of $[-\infty, +\infty]$, and the first heat map includes a pixel C, a pixel D, and a pixel E. If the pixel C has a value of 4000, the pixel D has a value of -500, and the pixel E has a value of 200, among the three pixel points, the pixel C is more likely to be a key point that the pixel D and the pixel E, and the pixel E is more likely to be a key point than the pixel D.

Illustratively, FIG. 5 is a schematic diagram of a first heat map. It is assumed that the first heat map has a size of 5×5 and includes 25 pixels. A value of each pixel is within a value range of [0, 1]. Among values of the pixels, 0.98 is maximum, and 0.05 is minimum. Therefore, the pixel having the value of 0.98 is most likely to be a key point, and the pixel having the value of 0.05 is least likely to be a key point. The precision of the value of the pixel is not limited in the embodiments of the present disclosure, which may be adjusted according to an actual requirement.

Optionally, the first heat map of each image frame in the target video is obtained in the above manner.

In step 306, a heat map code of the $i^{th}$ image frame and a heat map code of an adjacent image frame are obtained according to the first heat map of the $i^{th}$ image frame and a first heat map of the adjacent image frame.

Optionally, the heat map code of the $i^{th}$ image frame is obtained according to the first heat map of the $i^{th}$ image frame; and the heat map code of the adjacent image frame is obtained according to the first heat map of the adjacent image frame.

After the first heat map of each image frame in the target video is acquired, the first heat map of the $i^{th}$ image frame and the first heat map of the adjacent image frame are inputted to a heat map encoding model to acquire the heat map code of the $i^{th}$ image frame and the heat map code of the adjacent image frame.

The heat map encoding model is configured to encode a first heat map to obtain a heat map code. The heat map code reflects related information of the key points in the first heat map. The related information of the key points may include positions of the key points in the image frame and values in the first heat map corresponding to the key points. For example, the heat map code may be a one-dimensional vector obtained by encoding the first heat map, which may be expressed as (1.5, -10.6, 0.05, 8.1, ...).

In some embodiments, the related information of the key points may further include other information, which is not limited in the embodiments of the present disclosure.

OThe heat map encoding model may include at least one convolutional layer and at least one fully convolutional layer. The at least one convolutional layer may be connected in series with each other, and the at least one fully convolutional layer may also be connected in series with each other.

In this case, the obtaining the heat map code of the $i^{th}$ image frame and the heat map code of the adjacent image frame according to the first heat map of the $i^{th}$ image frame and the first heat map of the adjacent image frame may include the following two steps (1) and (2).

In step (1), a one-dimensional vector corresponding to the first heat map of the $i^{th}$ image frame and a one-dimensional vector corresponding to the first heat map of the adjacent image frame are obtained according to the first heat map of the $i^{th}$ image frame and the first heat map of the adjacent image frame.

The one-dimensional vector corresponding to the first heat map of the $i^{th}$ image frame is obtained according to the first heat map of the $i^{th}$ image frame. Similarly, the one-dimensional vector corresponding to the first heat map of the adjacent image frame is obtained according to the first heat map of the adjacent image frame.

The second heat maps of the key points of the target object included in the first heat map of the $i^{th}$ image frame may be inputted to the at least one convolutional layer, and the first heat map of the $i^{th}$ image frame may be expanded into a one-dimensional vector through the at least one convolutional layer, so as to obtain the one-dimensional vector corresponding to the first heat map of the $i^{th}$ image frame.

Similarly, the second heat maps of the key points of the target object included in the first heat map of the adjacent image frame may be inputted to the at least one convolutional layer, and the first heat map of the adjacent image frame may be expanded into a one-dimensional vector through the at least one convolutional layer, so as to obtain the one-dimensional vector corresponding to the first heat map of the adjacent image frame.

In step (2), the heat map code of the $i^{th}$ image frame and the heat map code of the adjacent image frame are obtained according to the one-dimensional vector corresponding to the first heat map of the $i^{th}$ image frame and the one-dimensional vector corresponding to the first heat map of the adjacent image frame.

The heat map code of the $i^{th}$ image frame is obtained according to the one-dimensional vector corresponding to the first heat map of the $i^{th}$ image frame; and the heat map code of the adjacent image frame is obtained according to the one-dimensional vector corresponding to the first heat map of the adjacent image frame.

The one-dimensional vector corresponding to the first heat map of the $i^{th}$ image frame is inputted to the at least one fully convolutional layer, and the one-dimensional vector corresponding to the first heat map of the $i^{th}$ image frame is transformed into a low-dimensional vector through the at least one fully convolutional layer to obtain the heat map code of the $i^{th}$ image frame.

Similarly, the one-dimensional vector corresponding to the first heat map of the adjacent image frame is inputted to the at least one fully convolutional layer, and the one-dimensional vector corresponding to the first heat map of the adjacent image frame is transformed into a low-dimensional vector through the at least one fully convolutional layer to obtain the heat map code of the adjacent image frame.

In step 307, the three-dimensional coordinates of the key points in the $i^{th}$ image frame are obtained according to the heat map code of the $i^{th}$ image frame and the heat map code of the adjacent image frame.

After the heat map code of the $i^{th}$ image frame and the heat map code of the adjacent image frame are acquired, the heat map code of the $i^{th}$ image frame and the heat map code of the adjacent image frame are inputted to the temporal multi-scale model to acquire the three-dimensional coordinates of the key points in the $i^{th}$ image frame.

The temporal multi-scale model is configured to predict three-dimensional coordinates of key points in a target image frame according to multiple image frames preceding and following the target image frame.

OThe temporal multi-scale model includes at least one convolutional layer and at least one fully connected layer. Each of the at least one convolutional layer has a different respective step size. The at least one convolutional layer is connected in parallel with each other, and the at least one fully connected layer is connected in series with each other.

In this case, the obtaining the three-dimensional coordinates of the key points in the $i^{th}$ image frame according to the heat map code of the $i^{th}$ image frame and the heat map code of the adjacent image frame includes the following two steps (1) and (2).

In step (1), the heat map code of the $i^{th}$ image frame and the heat map code of the adjacent image frame are inputted to the at least one convolutional layer to obtain a convolution result of each convolutional layer.

After the heat map code of the $i^{th}$ image frame and the heat map code of the adjacent image frame are acquired, for multiple convolutional layers connected in parallel, the heat map code of the $i^{th}$ image frame and the heat map code of the adjacent image frame are inputted to the multiple convolutional layers, so as to obtain convolution results outputted by the convolutional layers, respectively.

Illustratively, it is assumed that the temporal multi-scale model includes 3 convolution kernels, including 5 convolutional layers in total, i.e., a first convolutional layer, a second convolutional layer, a third convolutional layer, a fourth convolutional layer, and a fifth convolutional layer, and convolution step sizes of the 5 convolutional layers are 1, 2, 3, 5, and 7, respectively. When i equals to 10, a heat map code of the $10^{th}$ image frame, a heat map code of the $9^{th}$ image frame, and a heat map code of the $11^{th}$ image frame are inputted to the first convolutional layer to obtain a first convolution result. The heat map code of the $10^{th}$ image frame, the heat map code of the $9^{th}$ image frame, a heat map code of the $8^{th}$ image frame, the heat map code of the $11^{th}$ image frame, and a heat map code of the $12^{th}$ image frame may be inputted to the second convolutional layer to obtain a second convolution result. The heat map code of the $10^{th}$ image frame, the heat map code of the $9^{th}$ image frame, the heat map code of the $8^{th}$ image frame, a heat map code of the $7^{th}$ image frame, the heat map code of the $11^{th}$ image frame, the heat map code of the $12^{th}$ image frame, and a heat map code of the $13^{th}$ image frame may be inputted to the third convolutional layer to obtain a third convolution result. A fourth convolution result and a fifth convolution result may be obtained by analogy.

In step (2), the three-dimensional coordinates of the key points in the $i^{th}$ image frame are obtained according to the convolution results of the convolutional layers.

After the convolution results of the convolutional layers are obtained, the convolution results of the convolutional layers are connected, and the connected convolution results are inputted to the at least one fully connected layer, so as to predict the three-dimensional coordinates of the key points in the $i^{th}$ image frame.

In step 308, a target pose of the target object is acquired according to the three-dimensional coordinates of the key points in the $i^{th}$ image frame.

After the three-dimensional coordinates of the key points in the $i^{th}$ image frame are acquired, a three-dimensional human skeleton may be determined based on the three-dimensional coordinates of the key points. Since the human skeleton may characterizes a human pose, the target pose of the target object in the $i^{th}$ image frame may be further determined.

Based on the above, in the technical solution according to the embodiments of the present disclosure, the second heat maps of the key points of the target object in the target video are acquired, and based on the first heat map of the target image frame and the first heat map of the adjacent image frame of the target image frame, the heat map encoding model and the temporal multi-scale model are called to acquire the three-dimensional coordinates of the key points, to further acquire the target pose. In the related technology, the pose is directly acquired through the pose acquisition model after the two-dimensional coordinates of the key points of the target object are acquired from the picture. In contrast, in the technical solution according to the embodiments of the present disclosure, the pose is acquired based on the first heat map of the target image frame and the first heat map of the adjacent image frame of the target image frame, and the three-dimensional coordinates of the key points are predicted from multiple spatial and temporal scales, which can effectively improve the accuracy of the predicted coordinates of the key points.

In addition, a first heat map of an image frame is acquired by a heat map prediction model. The heat map prediction model extracts features of image frames at different spatial resolutions, so as to predict key points of a single image frame more accurately.

The pose acquisition method according to the embodiments of the present disclosure is introduced below with an example in which the pose acquisition method is applied to the field of game production, such as production of a basketball game.

First, the computer device may acquire a target video about playing basketball from a network or local storage. The target video may include some poses of a basketball player in playing basketball, such as a throw pose, a pass pose, a dribble pose, a defend pose, a shoot pose, a crossover pose, and a bank shot pose.

After the target video is acquired, the computer device may detect and track the basketball player in the target video, extract a target region in which the basketball player is located in a target image frame, and acquire a first heat map of the target image frame through the heat map prediction model, to determine two-dimensional coordinates of key points of the basketball player in the target image frame. The first heat map of the target image frame presents a probability that a pixel in the target region is a key point of the basketball player. The first heat map of the target image frame includes multiple second heat maps each for one of multiple key points of the basketball player. Then, the first heat map of the target image frame and a first heat map of an adjacent image frames of the target image frame are sequentially inputted to multiple convolutional layers and fully convolutional layers to obtain a heat map code of the target image frame and a heat map code of the adjacent image frame. Then, the heat map code of the target image frame and the heat map code of the adjacent image frame are inputted to the multiple convolutional layers and fully connected layers to obtain three-dimensional coordinates of key points of the basketball player in the target image frame. Finally, the three-dimensional coordinates of key points are connected to form a human skeleton which characterizes a human pose, so as to obtain a pose of the basketball player in the target video which is used as a pose of a character in a basketball game.

Based on the above, in the technical solution according to the embodiments of the present disclosure, poses are acquired through a large number of videos on the internet. In the related technology, the relevant personnel are required to wear wearable devices provided with sensors and to perform required actions. The sensors collect motion data of the relevant personnel in real time. A designer may convert the collected motion data into actions of digital models to generate poses of characters in games and animations. In contrast, in the embodiments of the present disclosure, an existing video is acquired, and a pose is acquired from the video, which may greatly reduce costs, and more realistically restore poses in various realistic scenes.

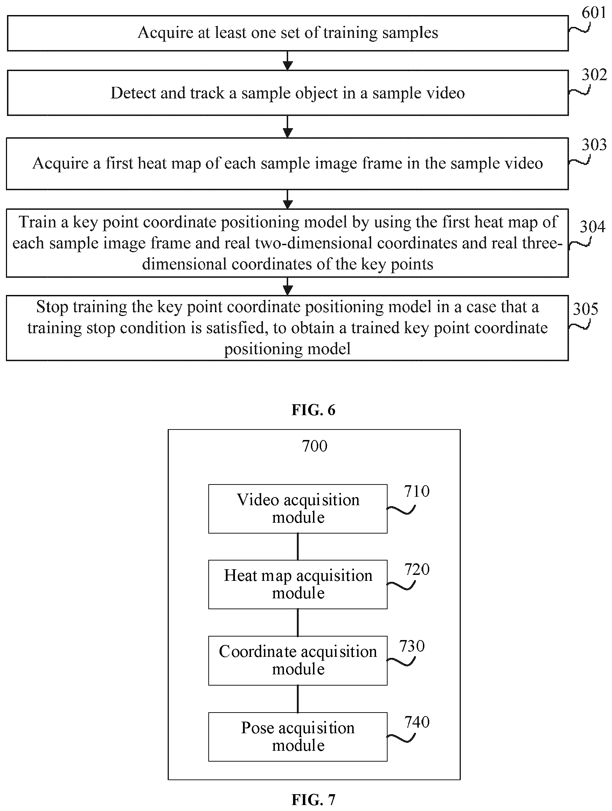

FIG. 6 is a flowchart of a method for training a key point coordinate positioning model according to an embodiment of the present disclosure. This embodiment is illustrated with an example in which the method is applied to the computer device introduced above. The method may include the following steps 601 to 605.

In step 601, at least one set of training samples is acquired.

At least one set of training samples needs to be acquired before the key point coordinate positioning model is trained. Each of the at least one set of training samples includes a sample video and real two-dimensional coordinates and real three-dimensional coordinates of key points of a sample object in the sample video.

The sample video is obtained by shooting a designated person by using a video shooting device. The designated person wears a wearable device, and the wearable device is provided with a sensor. Real two-dimensional coordinates and real three-dimensional coordinates of key points of the designated person are collected through the sensor.

Optionally, the sample video includes videos of the designated person shot from different viewing angles.

In step 602, the sample object in the sample video is detected and tracked.

The computer device detects and tracks the sample object in the sample video.

A specific implementation process may be obtained with reference to step 302 shown in FIG. 3, which is not described in detail herein.

In step 603, a first heat map of each sample image frame in the sample video is acquired.

The first heat map of the sample image frame includes multiple second heat maps each for one of multiple key points of the sample object in the sample image frame. A pixel value of a pixel in the first heat map indicates a probability that the pixel is a key point.

How to acquire the first heat map of the sample image frame in the sample video may be obtained with reference to the introduction to steps 303 to 305 in the embodiment of FIG. 3, which is not described in detail herein.

In step 604, the key point coordinate positioning model is trained by using the first heat map of each sample image frame and the real two-dimensional coordinates and the real three-dimensional coordinates of the key points.

The first heat map of each sample image frame in the sample video and the real two-dimensional coordinates and the real three-dimensional coordinates of the key points are acquired, based on which the key point coordinate positioning model may be trained. The key point coordinate positioning model is configured to determine predicted three-dimensional coordinates of key points in a target sample image frame according to a first heat map of the target sample image frame and a first heat map of an adjacent sample image frame of the target sample image frame.

Optionally, the training the key point coordinate positioning model by using the first heat map of each sample image frame and the real two-dimensional coordinates and the real three-dimensional coordinates of the key points may include the following two steps (1) and (2).

In step (1), a value of a target loss function is acquired.

The value of the target loss function is calculated according to a value of a three-dimensional loss function, a value of a two-dimensional loss function, a value of a discriminant loss function, and a value of a viewing-angle loss function. The value of the three-dimensional loss function is used for measuring a degree of difference between predicted three-dimensional coordinates of the key points and the real three-dimensional coordinates of the key points in a three-dimensional space. The value of the two-dimensional loss function is used for measuring a degree of difference between predicted two-dimensional coordinates of the key points and the real two-dimensional coordinates of the key points in a two-dimensional space. The value of the discriminant loss function is used for measuring rationality of a pose corresponding to the predicted three-dimensional coordinates of the key points. The value of the viewing-angle loss function is used for measuring a degree of difference between predicted three-dimensional coordinates of the key points from different viewing angles.

The three-dimensional loss function, the two-dimensional loss function, the discriminant loss function, and the viewing-angle loss function are introduced in detail below.

In step (2), parameters of the key point coordinate positioning model are adjusted according to the value of the target loss function.

Optionally, during the training, second heat maps of all of the multiple key points in at least one sample image frame in the sample video are zeroed; or second heat maps of a part of the multiple key points in the at least one sample image frame in the sample video are zeroed.

The second heat maps of all of the multiple key points in the at least one sample image frame in the sample video are zeroed to simulate a situation that the sample object is completely occluded in some sample image frames. The second heat maps of a part of the multiple key points in the at least one sample image frame in the sample video are zeroed to simulate a situation that the sample object is partially occluded in some sample image frames.

Optionally, the at least one sample image frame include consecutive sample image frames, to simulate a situation that the sample object is occluded and is invisible in multiple consecutive frames in a real environment.

In this way, the key point coordinate positioning model obtained by training may obtain robust prediction results in the case of no occlusion and partial occlusion in a video frame, and complete occlusion in some video frames.

In step 605, training of the key point coordinate positioning model is stopped in a case that a training stop condition is satisfied, to obtain a trained key point coordinate positioning model.

The training stop condition includes the value of the target loss function being less than a preset threshold or a number of times of the training being greater than a preset number of times. When the value of the target loss function is greater than or equal to the preset threshold, the parameters of the key point coordinate positioning model are adjusted, and step 604 is re-performed, until the value of the target loss function is less than the preset threshold.

The preset threshold and the preset number of times may be set according to actual experience, which are not limited in the embodiments of the present disclosure.

Optionally, the key point coordinate positioning model includes a heat map encoding model and a temporal multi-scale model. The heat map encoding module is configured to obtain, during application, a heat map code of the $i^{th}$ image frame and a heat map code of the adjacent image frame according to the first heat map of the $i^{th}$ image frame and the first heat map of the adjacent image frame. The heat map code reflects related information of the key points in the first heat map.

The temporal multi-scale model is configured to obtain the three-dimensional coordinates of the key points in the $i^{th}$ image frame according to the heat map code of the $i^{th}$ image frame and the heat map code of the adjacent image frame.

Based on the above, in the technical solution according to the embodiments of the present disclosure, the second heat maps of the key points of the sample object in the sample video are acquired, and the key point coordinate positioning model is trained based on the first heat map of the sample image frame and the first heat map of the adjacent image frame of the sample image frame. In the technical solution according to the embodiments of the present disclosure, the key point coordinate positioning model is trained based on the first heat map of the sample image frame and the first heat map of the adjacent image frame of the sample image frame, so as to be trained from multiple spatial and temporal scales, so that prediction results of the trained key point coordinate positioning model are more accurate.

In addition, robust prediction results can be obtained for no occlusion and partial occlusion in a video frame, and complete occlusion in some video frames.

The value of the three-dimensional loss function, the value of the two-dimensional loss function, the value of the discriminant loss function, and the value of the viewing-angle loss function included in the value of the target loss function are introduced in detail below.

I. Value of the three-dimensional loss function

The computer device acquires the value of the three-dimensional loss function through the following steps (1) and (2).

In step (1), the first heat map of each sample image frame in each sample video is inputted to the key point coordinate positioning model to obtain predicted three-dimensional coordinates of the key points.

In step (2), the predicted three-dimensional coordinates of the key points are compared with the real three-dimensional coordinates of the key points to obtain the value of the three-dimensional loss function.

After the predicted three-dimensional coordinates of the key points outputted by the key point coordinate positioning model are acquired, the predicted three-dimensional coordinates of the key points are compared with the real three-dimensional coordinates of the key points, to determine a degree of difference between the predicted three-dimensional coordinates and the real three-dimensional coordinates in the three-dimensional space.

Illustratively, assuming that the real three-dimensional coordinates of the key points are $(x_1, y_1, z_1)$ and the real three-dimensional coordinates of the key points are $(x_2, y_2, z_2)$, the value $L_{3D}$ of the three-dimensional loss function may be expressed as:

$$L_{3D} = (x_1 - x_2)^2 + (y_1 - y_2)^2 + (z_1 - z_2)^2 .$$

II. Value of the two-dimensional loss function

The computer device may acquire the value of the two-dimensional loss function through the following two steps (1) and (2).

In step (1), the predicted three-dimensional coordinates of the key points are mapped to a two-dimensional space to obtain predicted two-dimensional coordinates of the key points.

In step (2), the predicted two-dimensional coordinates of the key points are compared with real two-dimensional coordinates of the key points to obtain the value of the two-dimensional loss function.

The predicted three-dimensional coordinates of the key points, after being acquired, are mapped to the two-dimensional space, so as to obtain the predicted two-dimensional coordinates of the key points. Then, the predicted two-dimensional coordinates of the key points are compared with the real two-dimensional coordinates of the key points to determine a degree of difference between the predicted two-dimensional coordinates and the real two-dimensional coordinates in the two-dimensional space.

Illustratively, assuming that the real three-dimensional coordinates of the key points are $(x_1, y_1, z_1)$, and after the real three-dimensional coordinates are mapped to the two-dimensional space, the predicted two-dimensional coordinates of the key points are $(x_1, y_1)$ and the real three-dimensional coordinates of the key points are $(x_2, y_2)$, the value $L_{2D}$ of the two-dimensional loss function is expressed as:

$$L_{2D} = (x_1 - x_2)^2 + (y_1 - y_2)^2 .$$

III. Value of the discriminant loss function

The computer device may acquire the value of the three-dimensional loss function through the following three steps (1) to (3).

In step (1), a space skeleton representation of the target sample image frame and a time skeleton representation of the target sample image frame are acquired according to the predicted three-dimensional coordinates of the key points of the target sample image frame.

The space skeleton representation of the target sample image frame characterizes a length of a skeleton formed by the key points in the target sample image frame and an angle of a joint formed by the key points in the target sample image frame. The time skeleton representation of the target sample image frame is characterizes a skeleton length variation and a joint angle variation between the target sample image frame and the adjacent sample image frame.

Optionally, n key points are provided, n being an integer greater than 1.

The acquiring a space skeleton representation of the target sample image frame and a time skeleton representation of the target sample image frame according to the predicted three-dimensional coordinates of the key points of the target sample image frame may include the following steps <1> to <3>.

In step <1>, n key points in the target sample image frame are classified into m groups.

A sample object in the target sample image frame may include n key points. The n key points may be classified into m groups based on connection relationships among the key points. Each group includes two adjacent key points, m being a positive integer less than n.

For example, a right shoulder and a right elbow may be classified into a group. In another example, a left elbow and a left wrist may be classified into a group. In another example, a left knee and a left ankle may be classified into a group.

In step <2>, the space skeleton representation of the target sample image frame is acquired according to a difference between predicted three-dimensional coordinates of two adjacent key points in each group.

The computer device may calculate a difference between the predicted three-dimensional coordinates of two adjacent key points in each group to obtain a $3 \times m$ matrix M. Then, a $3 \times 3$ matrix may be obtained by calculating $\varphi = M^T M$ . The $3 \times 3$ matrix is the space skeleton representation of the target sample image frame. The space skeleton representation of the target sample image frame is characterizes a length of a skeleton formed by the key points in the target sample image frame and an angle of a joint formed by the key points in the target sample image frame.

In step <3>, the time skeleton representation of the target sample image frame is acquired according to the space skeleton representation of the target sample image frame and a space skeleton representation of the adjacent sample image frame.

The space skeleton representation of the adjacent sample image frame is obtained in a manner as described in step <2>. Further, the time skeleton representation of the target sample image frame is obtained. The time skeleton representation of the target sample image frame characterizes a skeleton length variation and a joint angle variation between the target sample image frame and the adjacent sample image frame.

Illustratively, the time skeleton representation of the target sample image frame may be expressed as:

$$\phi = \varphi_i - \varphi_{i-1} = M_i^T M_i - M_{i-1}^T M_{i-1},$$

where $\varphi_i$ denotes the space skeleton representation of the target sample image frame; $\varphi_{i-1}$ denotes the time skeleton representation of the adjacent sample image frame; and $\phi$ denotes the time skeleton representation of the target sample image frame.

In step (2), a pose rationality predictive value of the target sample image frame is acquired according to the predicted three-dimensional coordinates of the key points of the target sample image frame and the space skeleton representation and the time skeleton representation of the target sample image frame.

The pose rationality predictive value characterizes rationality of a pose corresponding to the predicted three-dimensional coordinates of the key points in the target sample image frame.

The predicted three-dimensional coordinates of the key points of the target sample image frame, the space skeleton representation of the target sample image frame and the time skeleton representation of the target sample image frame, after being acquired, are connected to form a one-dimensional vector, and the one-dimensional vector is inputted to a TCN network to extract multi-frame information, so as to obtain the pose rationality predictive value of the target sample image frame.

In step (3), the value of the discriminant loss function is calculated according to the pose rationality predictive value.

The pose rationality predictive value is inputted to a discriminator to obtain the value of the discriminant loss function. The value of the discriminant loss function is used for measuring rationality of the pose corresponding to the predicted three-dimensional coordinates of the key points.

Illustratively, the value $L_{dis}$ of the discriminant loss function may be expressed as:

$$L_{dis} = -\sum_j (u_j \log q_j + (1 - u_j) \log(1 - q_j));$$

where $u_j$ denotes whether a $j$th pose is a real pose, if the $j$th

pose is a real pose, $u_j$ has a value of 1, and if the $j$th pose is a predicted pose, $u_j$ has a value of 0; $q_j$ denotes the pose rationality predictive value in a range of [0, 1].

It is determined according to the value of the discriminant loss function whether the predicted three-dimensional coordinates constitute a rational human pose and whether the predicted three-dimensional coordinates constitute a rational motion trajectory in time, without irrational joint motion.

IV. Value of the viewing-angle loss function

The computer device may acquire the value of the viewing-angle loss function through the following two steps (1) and (2).

In step (1), predicted three-dimensional coordinates of the key points from a first viewing angle and predicted three-dimensional coordinates of the key points from a second viewing angle are obtained through the key point coordinate positioning model.

In step (2), the predicted three-dimensional coordinates of the key points from the first viewing angle and the predicted three-dimensional coordinates of the key points from the second viewing angle are compared to obtain the value of the viewing-angle loss function.

The sample video may include videos obtained by shooting the sample object from different viewing angles. In sample videos of a same sample object shot from different viewing angles at the same time, if three-dimensional coordinates of key points are predicted by using the same key point coordinate positioning model, results thereof are consistent. The viewing-angle loss function may be calculated based on this to measure a degree of difference between the three-dimensional coordinates of the key points from different viewing angles.

Illustratively, the value $L_{mv}$ of the viewing-angle loss function may be expressed as:

$$L_{mv} = (R_{v1 \rightarrow v2} \widetilde{X}_{v1} - \widetilde{X}_{v2})^2;$$

where $R_{v1 \rightarrow v2}$ denotes a rotation matrix from the first viewing angle to the second viewing angle; $\tilde{X}_{v1}$ denotes the predicted three-dimensional coordinates of the key points from the first viewing angle; and $\tilde{X}_{v2}$ denotes the predicted three-dimensional coordinates of the key points from the second viewing angle.

Based on the above, in the technical solution according to the embodiments of the present disclosure, during the draining, not only the two-dimensional space and the three-dimensional space are taken into account, but also the prediction of space pose rationality and judgment of pose rationality in time series are adopted, which makes the pose corresponding to the predicted three-dimensional coordinates of the key points more appropriate.

The following is an apparatus embodiment of the present disclosure, which may be configured to perform the method embodiment of the present disclosure. For details not disclosed in the apparatus embodiments of the present disclosure, refer to the method embodiments of the present disclosure.

FIG. 7 is a flowchart of a pose acquisition apparatus according to an embodiment of the present disclosure. The apparatus has a function of implementing the example of the pose acquisition method. The function may be implemented by hardware, or by hardware executing corresponding software. The apparatus may be the computer device introduced above, or may be disposed on the computer device. The apparatus 700 may include: a video acquisition module 710, a heat map acquisition module 720, a coordinate acquisition module 730, and a pose acquisition module 740.

The video acquisition module 710 is configured to acquire a target video.

The heat map acquisition module 720 is configured to acquire, for an $i^{th}$ image frame in the target video, a first heat map of the $i^{th}$ image frame, the first heat map of the $i^{th}$ image frame including multiple second heat maps each for one of multiple key points, the key points corresponding to a target object in the $i^{th}$ image frame, a value of a pixel in the first heat map indicating a probability that the pixel is a key point, i being a positive integer.

The coordinate acquisition module 730 is configured to obtain three-dimensional coordinates of the key points in the $i^{th}$ image frame according to the first heat map of the $i^{th}$ image frame and a first heat map of an adjacent image frame.

The pose acquisition module 740 is configured to acquire a target pose of the target object according to the three-dimensional coordinates of the key points in the $i^{th}$ image frame, the target pose being a pose of the target object in the $i^{th}$ image frame.

The second heat maps of the key points of the target object in the target video are acquired, and the target pose of the target object in the target image frame is acquired based on the first heat map of the target image frame and the first heat map of the adjacent image frame of the target image frame. In the related technology, the pose is directly acquired through the pose acquisition model after the two-dimensional coordinates of the key points of the target object are acquired from the picture. In contrast, in the technical solution according to the embodiments of the present disclosure, the pose is acquired based on the first heat map of the target image frame and the first heat map of the adjacent image frame of the target image frame, which can effectively overcome the problem of inaccurate prediction caused by different sizes and poses of the target object in different pictures, thereby improving the accuracy of predicted positions of the key points and further improving the accuracy of the acquired pose.

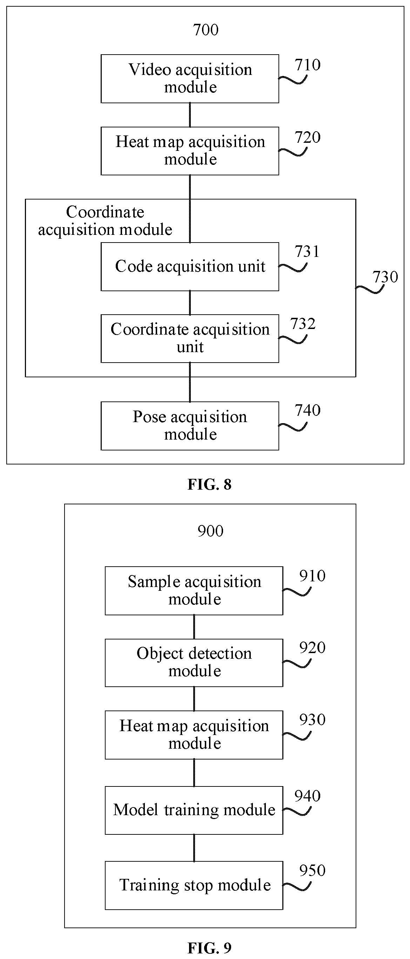

In some possible designs, as shown in FIG. 8, the coordinate acquisition module 730 includes a code acquisition unit 731 and a coordinate acquisition unit 732.

The code acquisition unit 731 is configured to obtain a heat map code of the $i^{th}$ image frame according to the first heat map of the $i^{th}$ image frame, and obtain a heat map code of the adjacent image frame according to the first heat map of the adjacent image frame, the heat map code reflecting related information of the key points in the first heat map.

The coordinate acquisition unit 732 is configured to obtain the three-dimensional coordinates of the key points in the $i^{th}$ image frame according to the heat map code of the $i^{th}$ image frame and the heat map code of the adjacent image frame.

In some possible designs, the code acquisition module 731 is configured to determine a one-dimensional vector corresponding to the first heat map of the $i^{th}$ image frame; and obtaining the heat map code of the $i^{th}$ image frame according to the one-dimensional vector corresponding to the first heat map of the $i^{th}$ image frame; and determine a one-dimensional vector corresponding to the first heat map of the adjacent image frame; and obtain the heat map code of the adjacent image frame according to the one-dimensional vector corresponding to the first heat map of the adjacent image frame.

In some possible designs, the coordinate acquisition unit 732 is configured to input the heat map code of the $i^{th}$ image frame and the heat map code of the adjacent image frame to at least one convolutional layer to obtain a convolution result of the at least one convolutional layer; and obtain the three-dimensional coordinates of the key points in the $i^{th}$ image frame according to the convolution results of the at least one convolutional layer.

In some possible designs, the heat map acquisition module 720 is configured to extract a target region in which the target object is located in the $i^{th}$ image frame; adjust the target region to a target size to obtain an adjusted target region; and obtain the first heat map of the $i^{th}$ image frame according to the adjusted target region.

FIG. 9 is a block diagram of an apparatus for training a key point coordinate positioning model according to an embodiment of the present disclosure. The apparatus has a function of implementing the example of the apparatus for training a key point coordinate positioning model. The function may be implemented by hardware, or by hardware executing corresponding software. The apparatus may be the computer device introduced above, or may be disposed on the computer device. The apparatus 900 may include:

a sample acquisition module 910 configured to acquire at least one set of training samples, each of the at least one set of training samples including a sample video and real two-dimensional coordinates and real three-dimensional coordinates of key points of a sample object in the sample video;

an object detection module 920 configured to detect and track the sample object in the sample video;

a heat map acquisition module 930 configured to acquire, for each sample image frame in the sample video, a first heat map of the sample image frame, the first heat map of the sample image frame including multiple second heat maps each for one of multiple key points, the key points corresponding to the sample object in the sample image frame, a pixel value of a pixel in the first heat map indicating a probability that the pixel is a key point;

a model training module 940 configured to train the key point coordinate positioning model by using the first heat map of each sample image frame and the real two-dimensional coordinates and the real three-dimensional coordinates of the key points, the key point coordinate positioning model being configured to determine predicted three-dimensional coordinates of key points in a target sample image frame according to a first heat map of the target sample image frame and a first heat map of an adjacent sample image frame; and

a training stop module 950 configured to stop training the key point coordinate positioning model in a case that a training stop condition is satisfied, to obtain a trained key point coordinate positioning model.

Based on the above, in the technical solution according to the embodiments of the present disclosure, the second heat maps of the key points of the sample object in the sample video are acquired, and the key point coordinate positioning model is trained based on the first heat map of the sample image frame and the first heat map of the adjacent image frame of the sample image frame. In the technical solution according to the embodiments of the present disclosure, the key point coordinate positioning model is trained based on the first heat map of the sample image frame and the first heat map of the adjacent image frame of the sample image frame, so as to trained from multiple spatial and temporal scales, so that prediction results of the trained key point coordinate positioning model are more accurate.

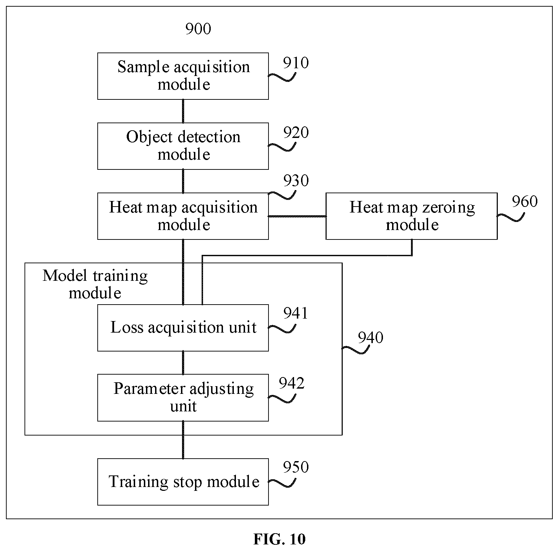

In some possible designs, as shown in FIG. 10, the model training module 940 includes a loss acquisition unit 941 and a parameter adjusting unit 942.

The loss acquisition unit 941 is configured to acquire a value of a target loss function, the value of the target loss function being calculated according to a value of a three-dimensional loss function, a value of a two-dimensional loss function, a value of a discriminant loss function, and a value of a viewing-angle loss function, where the value of the three-dimensional loss function is used for measuring a degree of difference between predicted three-dimensional coordinates of the key points and the real three-dimensional coordinates of the key points in a three-dimensional space, the value of the two-dimensional loss function is used for measuring a degree of difference between predicted two-dimensional coordinates of the key points and the real two-dimensional coordinates of the key points in a two-dimensional space, the value of the discriminant loss function is configured to measure rationality of a pose corresponding to the predicted three-dimensional coordinates of the key points, and the value of the viewing-angle loss function is used for measuring a degree of difference between predicted three-dimensional coordinates of the key points from different viewing angles.

The parameter adjusting unit 942 is configured to adjust a parameter of the key point coordinate positioning model according to the value of the target loss function.

In some possible designs, the loss acquisition unit 941 is configured to acquire a space skeleton representation and a time skeleton representation of the target sample image frame according to the predicted three-dimensional coordinates of the key points in the target sample image frame, the space skeleton representation characterizing a length of a skeleton and an angle of a joint formed by the key points in the target sample image frame, and the time skeleton representation characterizing a skeleton length variation and a joint angle variation between the target sample image frame and the adjacent sample image frame; acquire a pose rationality predictive value of the target sample image frame according to the predicted three-dimensional coordinates of the key points of the target sample image frame and the space skeleton representation and the time skeleton representation of the target sample image frame, the pose rationality predictive value characterizing rationality of a pose corresponding to the predicted three-dimensional coordinates of the key points in the target sample image frame; and calculate the value of the discriminant loss function according to the pose rationality predictive value.

In some possible designs, n key points are provided, n being an integer greater than 1; and the loss acquisition unit 941 is configured to classify the n key points in the target sample image frame into m groups, each group including two adjacent key points, m being a positive integer less than n; acquire the space skeleton representation of the target sample image frame according to a difference between predicted three-dimensional coordinates of two adjacent key points in each of the m groups; and acquire the time skeleton representation of the target sample image frame according to the space skeleton representation of the target sample image frame and a space skeleton representation of the adjacent sample image frame.

In some possible designs, the training sample includes video samples obtained by shooting the sample object from different viewing angles; and the loss acquisition unit 941 is configured to obtain, through the key point coordinate positioning model, predicted three-dimensional coordinates of the key points from a first viewing angle and predicted three-dimensional coordinates of the key points from a second viewing angle; and compare the predicted three-dimensional coordinates of the key points from the first viewing angle with the predicted three-dimensional coordinates of the key points from the second viewing angle to obtain the value of the viewing-angle loss function.

In some possible designs, as shown in FIG. 10, the apparatus 900 further includes a heat map zeroing module 960.

The heat map zeroing module 960 is configured to zero second heat maps of all of the multiple key points in at least one sample image frame in the sample video;

**or**

the heat map zeroing module 960 is configured to zero heat maps of a part of the multiple key points in the at least one sample image frame in the sample video.

When the apparatus provided in the foregoing embodiments implements functions of the apparatus, the division of the foregoing functional modules is merely an example for description. In the practical application, the functions may be assigned to and completed by different functional modules according to the requirements, that is, the internal structure of the device is divided into different functional modules, to implement all or some of the functions described above. In addition, the apparatus and method embodiments provided in the foregoing embodiments belong to the same concept. For the specific implementation process, reference may be made to the method embodiments, and details are not described herein again.

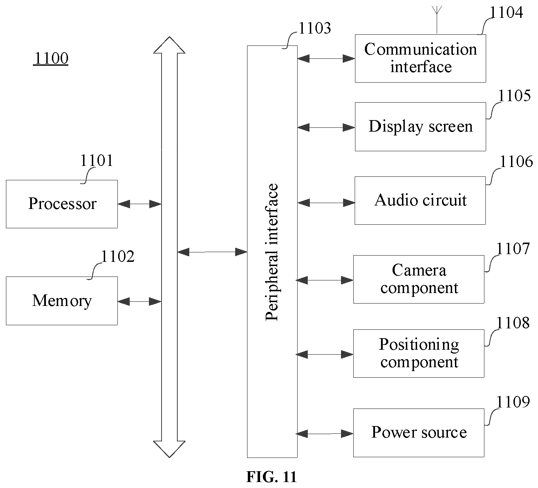

FIG. 11 is a structural block diagram of a terminal according to an embodiment of the present disclosure. Generally, a terminal 1100 includes a processor 1101 and a memory 1102.

The processor 1101 may include one or more processing cores, for example, a 4-core processor or an 8-core processor. The processor 1101 may be implemented by using at least one hardware form of a digital signal processor (DSP), a field programmable gate array (FPGA), and a programmable logic array (PLA). The processor 1101 may alternatively include a main processor and a coprocessor. The main processor is a processor that is configured to process data in an awake state and also referred to as a central processing unit (CPU), and the coprocessor is a low-power processor configured to process data in an idle state. In some embodiments, the processor 1101 may be integrated with a graphics processing unit (GPU). The GPU is configured to render and draw content that needs to be displayed on a display. In some embodiments, the processor 1101 may further include an AI processor. The AI processor is configured to process computing operations related to ML.

The memory 1102 may include one or more computer-readable storage media. The computer-readable storage medium may be non-transient. The memory 1102 may further include a high-speed random access memory (RAM) and a nonvolatile memory, for example, one or more disk storage devices or flash storage devices. In some embodiments, the non-transient computer computer-readable storage medium in the memory 1102 is configured to store at least one instruction, at least one program, a code set or an instruction set. The at least one instruction, the at least one program, the code set or the instruction set is configured to be executed by the processor 1101 to implement the pose acquisition method according to the method embodiment in the present disclosure or implement the training method for a key point coordinate positioning model as described in the above aspect.

In some embodiments, the terminal 1100 may optionally include a peripheral interface 1103 and at least one peripheral. The processor 1101, the memory 1102, and the peripheral interface 1103 may be connected by a bus or a signal line. Each peripheral may be connected to the peripheral interface 1103 by using a bus, a signal cable, or a circuit board. Specifically, the peripheral may include: at least one of a communication interface 1104, a display screen 1105, an audio circuit 1106, a camera component 1107, a positioning component 1108, and a power supply 1109.

A person skilled in the art may understand that the structure shown in FIG. 11 does not constitute a limitation on the terminal 1100 and that the terminal may include more or fewer assemblies than those shown in the figure, a combination of some assemblies, or different assembly arrangements.

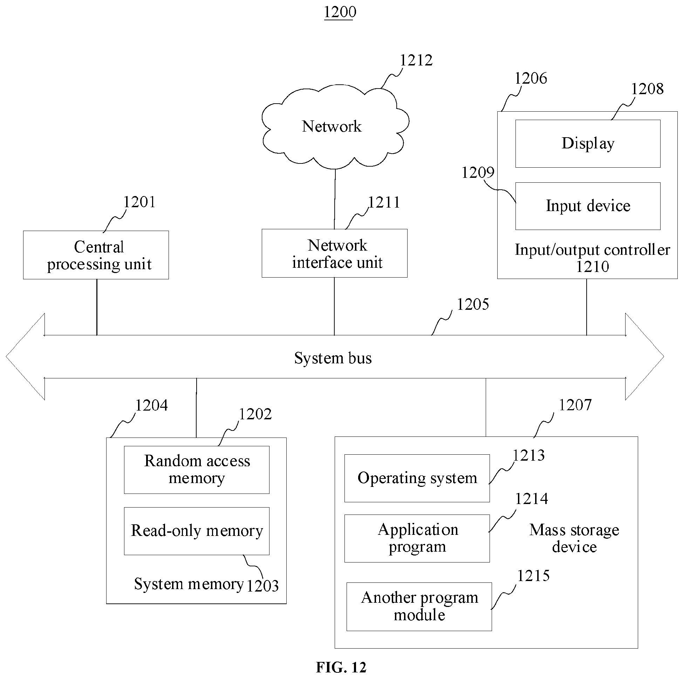

FIG. 12 is a schematic structural diagram of a server according to an embodiment of the present disclosure.

Specifically, the server 1200 includes a CPU 1201, a system memory 1204 including a RAM 1202 and a read-only memory (ROM) 1203, and a system bus 1205 connecting the system memory 1204 and the CPU 1201. The server 1200 further includes a basic input/output (I/O) system 1206 helping transmit information between components in a computer, and a mass storage device 1207 used for storing an operating system 1213, an application program 1214, and another program module 1212.

The basic I/O system 1206 includes a display 1208 configured to display information and an input device 1209 configured for a user to input information, such as a mouse or a keyboard. The display 1208 and the input device 1209 are both connected to the CPU 1201 by using an input/output controller 1210 connected to the system bus 1205. The basic I/O system 1206 may further include the input/output controller 1210, to receive and process inputs from a plurality of other devices, such as the keyboard, the mouse, or an electronic stylus. Similarly, the I/O controller 1210 further provides an output to a display, a printer or another type of output device.

The large-capacity storage device 1207 is connected to the CPU 1201 by using a large-capacity storage controller (not shown) connected to the system bus 1205. The large-capacity storage device 1207 and an associated computer readable medium provide non-volatile storage for the server 1200. That is, the mass storage device 1207 may include a computer-readable medium (not shown) such as a hard disk or a compact disc ROM (CD-ROM) drive.

In general, the computer-readable medium may include a computer storage medium and a communication medium. The computer-storage medium includes volatile and non-volatile media, and removable and non-removable media implemented by using any method or technology used for storing information such as computer-readable instructions, data structures, program modules, or other data. The computer storage medium includes a RAM, a ROM, an erasable programmable ROM (EPROM), a flash memory or another solid-state storage technology, a CD-ROM, a DVD or another optical storage, a magnetic cassette, a magnetic tape, or a magnetic disk storage or another magnetic storage device. Certainly, it is known to a person skilled in the art that the computer storage medium is not limited to the foregoing types. The system memory 1204 and the mass storage device 1207 may be collectively referred to as a memory.

According to the embodiments of the present disclosure, the server 1200 may further be connected, by using a network such as the Internet, to a remote computer on the network and run. That is, the server 1200 may be connected to a network 1212 by using a network interface unit 1211 connected to the system bus 1205, or may be connected to another type of network or a remote computer system (not shown) by using the network interface unit 1211.

The memory further includes at least one instruction, at least one program, a code set or an instruction set. The at least one instruction, the at least one program, the code set or the instruction set is stored in the memory and is configured to be executed by one or more processors to implement the pose acquisition method described above or implement the method for training a key point coordinate positioning model as described in the above aspect.

In an exemplary embodiment, a computer device is further provided. The computer device may be a terminal or a server. The computer device includes a processor and a memory. The memory stores at least one instruction, at least one program, a code set or an instruction set. The at least one instruction, the at least one program, the code set or the instruction set is loaded and executed by the processor to implement the pose acquisition method described above or implement the method for training a key point coordinate positioning model as described in the above aspect.

In an exemplary embodiment, a computer-readable storage medium is further provided. The computer-readable storage medium stores at least one instruction, at least one program, a code set or an instruction set. The at least one instruction, the at least one program, the code set or the instruction set, when executed by a processor, implements the pose acquisition method described above or implements the method for training a key point coordinate positioning model as described in the above aspect.

In an exemplary embodiment, a computer program product or a computer program is provided. The computer program product or the computer program includes computer instructions, and the computer instructions are stored in a computer-readable storage medium. A processor of a computer device reads the computer instructions from the computer-readable storage medium. The processor executes the computer instructions to cause the computer device to perform the pose acquisition method in any one of the above embodiments or implement the method for training a key point coordinate positioning model as described in the above aspect.

It is to be understood that "plurality of" mentioned in this specification means two or more. "And/or" describes an association relationship for associated objects and represents that three relationships may exist. For example, A and/or B may represent the following three cases: only A exists, both A and B exist, and only B exists. The character "/" in this specification generally indicates an "or" relationship between the associated objects.

## Claims

1. A pose acquisition method, applicable to a computer device, the method comprising:

   acquiring a target video;
   acquiring, for an $i^{th}$ image frame in the target video, a first heat map of the $i^{th}$ image frame, the first heat map of the $i^{th}$ image frame comprising a plurality of second heat maps each for one of a plurality of key points, the key points corresponding to a target object in the $i^{th}$ image frame, a value of a pixel in the first heat map indicating a probability that the pixel is a key point, i being a positive integer;
   obtaining three-dimensional coordinates of the key points in the $i^{th}$ image frame according to the first heat map of the $i^{th}$ image frame and a first heat map of an adjacent image frame by using a key point coordinate positioning model; and
   acquiring a target pose of the target object according to the three-dimensional coordinates of the key points in the $i^{th}$ image frame, the target pose being a pose of the target object in the $i^{th}$ image frame, wherein
   the key point coordinate positioning model comprises a heat map encoding model and a temporal multi-scale model, the heat map encoding model comprises at least one convolutional layer and at least one fully convolutional layer, the temporal multi-scale model comprises at least one convolutional layer and at least one fully connected layer, and
the obtaining three-dimensional coordinates of the key points in the $i^{th}$ image frame according to the first heat map of the $i^{th}$ image frame and a first heat map of an adjacent image frame comprises:

inputting the first heat map of the $i^{th}$ image frame and the first heat map of the adjacent image frame into the heat map encoding model to acquire the heat map code of the $i^{th}$ image frame and the heat map code of the adjacent image frame; and
inputting the heat map code of the $i^{th}$ image frame and the heat map code of the adjacent image frame into the temporal multi-scale model to acquire the three-dimensional coordinates of the key points in the $i^{th}$ image frame.

2. The method according to claim 1, wherein the inputting the first heat map of the $i^{th}$ image frame and the first heat map of the adjacent image frame into the heat map encoding model to acquire the heat map code of the $i^{th}$ image frame and the heat map code of the adjacent image frame comprises:

determining, by using the at least one convolutional layer of the heat map encoding model, a one-dimensional vector corresponding to the first heat map of the $i^{th}$ image frame; and obtaining the heat map code of the $i^{th}$ image frame according to the one-dimensional vector corresponding to the first heat map of the $i^{th}$ image frame; and
determining, by using the at least one convolutional layer of the heat map encoding model, a one-dimensional vector corresponding to the first heat map of the adjacent image frame; and obtaining the heat map code of the adjacent image frame according to the one-dimensional vector corresponding to the first heat map of the adjacent image frame.

3. The method according to claim 1, wherein the inputting the heat map code of the $i^{th}$ image frame and the heat map code of the adjacent image frame into the temporal multi-scale model to acquire the three-dimensional coordinates of the key points in the $i^{th}$ image frame comprises:

inputting the heat map code of the $i^{th}$ image frame and the heat map code of the adjacent image frame to at least one convolutional layer of the temporal multi-scale model to obtain a convolution result of the at least one convolutional layer; and
obtaining the three-dimensional coordinates of the key points in the $i^{th}$ image frame according to the convolution result of the at least one convolutional layer by using the at least one fully connected layer of the temporal multi-scale model.

4. The method according to any one of claims 1 to 3, wherein the acquiring a first heat map of the $i^{th}$ image frame comprises:

extracting a target region in which the target object is located in the $i^{th}$ image frame;
adjusting the target region to a target size to obtain an adjusted target region; and
obtaining the first heat map of the $i^{th}$ image frame according to the adjusted target region.

5. The method according to claim 1, wherein the temporal multi-scale model comprises a plurality of convolutional layers that are connected in parallel.

6. A method for training a key point coordinate positioning model, applicable to a computer device, the method comprising:

acquiring at least one set of training samples, each of the at least one set of training samples comprising a sample video and real two-dimensional coordinates and real three-dimensional coordinates of key points of a sample object in the sample video;
detecting and tracking the sample object in the sample video;
for each sample image frame in the sample video, acquiring a first heat map of the sample image frame, the first heat map of the sample image frame comprising a plurality of second heat maps each for one of a plurality of key points, the key points corresponding to the sample object in the sample image frame, and a pixel value of a pixel in the first heat map indicating a probability that the pixel is a key point;
training the key point coordinate positioning model by using the first heat map of each sample image frame and the real two-dimensional coordinates and the real three-dimensional coordinates of the key points, the key point coordinate positioning model being configured to determine predicted three-dimensional coordinates of key points in a target sample image frame according to a first heat map of the target sample image frame and a first heat map of an adjacent sample image frame; and

stopping training the key point coordinate positioning model in a case that a training stop condition is satisfied, to obtain a trained key point coordinate positioning model, wherein the key point coordinate positioning model comprises a heat map encoding model and a temporal multi-scale model,

the heat map encoding model comprises at least one convolutional layer and at least one fully convolutional layer, and is configured to process the first heat map of the target sample image frame and the first heat map of the adjacent image frame to obtain a heat map code of the target sample image frame and a heat map code of the adjacent image frame, and

the temporal multi-scale model comprises at least one convolutional layer and at least one fully connected layer, and is configured to process the heat map code of the target sample image frame and the heat map code of the adjacent image frame to obtain the three-dimensional coordinates of the key points in the target sample image frame.

7. The method according to claim 6, wherein the training the key point coordinate positioning model by using the first heat map of each sample image frame and the real two-dimensional coordinates and the real three-dimensional coordinates of the key points comprises:

acquiring a value of a target loss function, the value of the target loss function being calculated according to a value of a three-dimensional loss function, a value of a two-dimensional loss function, a value of a discriminant loss function, and a value of a viewing-angle loss function; and adjusting a parameter of the key point coordinate positioning model according to the value of the target loss function.

8. The method according to claim 7, wherein the acquiring a value of a target loss function comprises:

acquiring a space skeleton representation and a time skeleton representation of the target sample image frame according to the predicted three-dimensional coordinates of the key points in the target sample image frame, the space skeleton representation characterizing a length of a skeleton and an angle of a joint formed by the key points in the target sample image frame, and the time skeleton representation characterizing a skeleton length variation and a joint angle variation between the target sample image frame and the adjacent sample image frame; acquiring a pose rationality predictive value of the target sample image frame according to the predicted three-dimensional coordinates of the key points of the target sample image frame and the space skeleton representation and the time skeleton representation of the target sample image frame, the pose rationality predictive value characterizing rationality of a pose corresponding to the predicted three-dimensional coordinates of the key points in the target sample image frame; and calculating the value of the discriminant loss function according to the pose rationality predictive value.

9. The method according to claim 8, wherein n key points are provided, n being an integer greater than 1; and

the acquiring a space skeleton representation and a time skeleton representation of the target sample image frame according to the predicted three-dimensional coordinates of the key points in the target sample image frame comprises:

classifying the n key points in the target sample image frame into m groups, each group comprising two adjacent key points, m being a positive integer less than n;

acquiring the space skeleton representation of the target sample image frame according to a difference between predicted three-dimensional coordinates of two adjacent key points in each of the m groups; and

acquiring the time skeleton representation of the target sample image frame according to the space skeleton representation of the target sample image frame and a space skeleton representation of the adjacent sample image frame.

10. The method according to claim 7, wherein the training sample comprises video samples obtained by shooting the sample object from different viewing angles; and

the acquiring a value of a target loss function comprises:

obtaining, through the key point coordinate positioning model, predicted three-dimensional coordinates of the key points from a first viewing angle and predicted three-dimensional coordinates of the key points from a second viewing angle; and

comparing the predicted three-dimensional coordinates of the key points from the first viewing angle with the predicted three-dimensional coordinates of the key points from the second viewing angle to obtain the value of the viewing-angle loss function.

11. The method according to any one of claims 6 to 10, further comprising: after the acquiring at least one set of training samples,

zeroing second heat maps of all of the multiple key points in at least one sample image frame in the sample video;
or
zeroing second heat maps of a part of the multiple key points in the at least one sample image frame in the sample video.

12. A pose acquisition apparatus, comprising:

a video acquisition module configured to acquire a target video;
a heat map acquisition module configured to acquire, for an $i^{th}$ image frame in the target video, a first heat map of the $i^{th}$ image frame, the first heat map of the $i^{th}$ image frame comprising a plurality of second heat maps each for one of a plurality of key points, the key points corresponding to a target object in the $i^{th}$ image frame, a value of a pixel in the first heat map indicating a probability that the pixel is a key point, i being a positive integer;
a coordinate acquisition module configured to obtain three-dimensional coordinates of the key points in the $i^{th}$ image frame according to the first heat map of the $i^{th}$ image frame and a first heat map of an adjacent image frame by using a key point coordinate positioning model; and
a pose acquisition module configured to acquire a target pose of the target object according to the three-dimensional coordinates of the key points in the $i^{th}$ image frame, the target pose being a pose of the target object in the $i^{th}$ image frame, wherein the key point coordinate positioning model comprises a heat map encoding model and a temporal multi-scale model, the heat map encoding model comprises at least one convolutional layer and at least one fully convolutional layer, the temporal multi-scale model comprises at least one convolutional layer and at least one fully connected layer, and the coordinate acquisition module is further configured to
input the first heat map of the $i^{th}$ image frame and the first heat map of the adjacent image frame into the heat map encoding model to acquire the heat map code of the $i^{th}$ image frame and the heat map code of the adjacent image frame; and
input the heat map code of the $i^{th}$ image frame and the heat map code of the adjacent image frame into the temporal multi-scale model to acquire the three-dimensional coordinates of the key points in the $i^{th}$ image frame.

13. An apparatus for training a key point coordinate positioning model, comprising:

a sample acquisition module configured to acquire at least one set of training samples, each of the at least one set of training samples comprising a sample video and real two-dimensional coordinates and real three-dimensional coordinates of key points of a sample object in the sample video;
an object detection module configured to detect and track the sample object in the sample video;
a heat map acquisition module configured to, for each sample image frame in the sample video, acquire a first heat map of the sample image frame, the first heat map of the sample image frame comprising a plurality of second heat maps each for one of a plurality of key points, the key points corresponding to the sample object in the sample image frame, a pixel value of a pixel in the first heat map indicating a probability that the pixel is a key point;
a model training module configured to train the key point coordinate positioning model by using the first heat map of each sample image frame and the real two-dimensional coordinates and the real three-dimensional coordinates of the key points, the key point coordinate positioning model being configured to determine predicted three-dimensional coordinates of key points in a target sample image frame according to a first heat map of the target sample image frame and a first heat map of an adjacent sample image frame; and
a training stop module configured to stop training the key point coordinate positioning model in a case that a training stop condition is satisfied, to obtain a trained key point coordinate positioning model, wherein
the key point coordinate positioning model comprises a heat map encoding model and a temporal multi-scale model,
the heat map encoding model comprises at least one convolutional layer and at least one fully convolutional layer, and is configured to process the first heat map of the target sample image frame and the first heat map of the adjacent image frame to obtain a heat map code of the target sample image frame and a heat map code of the adjacent image frame, and
the temporal multi-scale model comprises at least one convolutional layer and at least one fully connected layer, and is configured to process the heat map code of the target sample image frame and the heat map code of the adjacent image frame to obtain the three-dimensional coordinates of the key points in the target sample image frame.

**14.** A computer program comprising at least one instruction which, when the program is executed by a processor, causes the processor to implement the method according to any one of claims 1 to 5 or implement the method according to any one of claims 6 to 11.

**15.** A computer-readable storage medium, storing at least one instruction which, when executed by a processor, causes the processor to implement the method according to any one of claims 1 to 5 or implement the method according to any one of claims 6 to 11.

**Patentansprüche**

**1.** Stellungserfassungsverfahren, das auf eine Computervorrichtung anwendbar ist, wobei das Verfahren Folgendes umfasst:

Erfassen eines Zielvideos;
Erfassen einer ersten Wärmekante eines i-ten Bildframes für den i-ten Bildframe im Zielvideo, wobei die erste Wärmekarte des i-ten Bildframes eine Vielzahl von zweiten Wärmekarten umfasst, jede für einen einer Vielzahl von Schlüsselpunkten, wobei die Schlüsselpunkte einem Zielobjekt im i-ten Bildframe entsprechen, wobei ein Wert eines Pixels in der ersten Wärmekarte eine Wahrscheinlichkeit anzeigt, dass es sich bei dem Pixel um einen Schlüsselpunkt handelt, wobei i eine positive Ganzzahl ist;
Erhalten von dreidimensionalen Koordinaten der Schlüsselpunkte im i-ten Bildframe gemäß der ersten Wärmekarte des i-ten Bildframes und einer ersten Wärmekarte eines benachbarten Bildframes unter Verwendung eines Modells zur Positionsbestimmung von Schlüsselpunktkoordinaten; und
Erfassen einer Zielstellung des Zielobjekts gemäß den dreidimensionalen Koordinaten der Schlüsselpunkte im i-ten Bildframe, wobei es sich bei der Zielstellung um eine Stellung des Zielobjekts im i-ten Bildframe handelt, wobei das Modell zur Positionsbestimmung von Schlüsselpunktkoordinaten ein Wärmekartencodiermodell und ein zeitliches mehrskaliges Modell umfasst, das Wärmekartencodiermodell mindestens eine Faltungsschicht und mindestens eine vollständige Faltungsschicht umfasst, das zeitliche mehrskalige Modell mindestens eine Faltungsschicht und mindestens eine vollständig verbundene Schicht umfasst, und das Erhalten von dreidimensionalen Koordinaten der Schlüsselpunkte des i-ten Bildframes gemäß der ersten Wärmekarte des i-ten Bildframes und einer ersten Wärmekarte eines benachbarten Bildframes Folgendes umfasst:

Eingeben der ersten Wärmekarte des i-ten Bildframes und der ersten Wärmekarte des benachbarten Bildframes in das Wärmekartencodiermodell, um den Wärmekartencode des i-ten Bildframes und den Wärmekartencode des benachbarten Bildframes zu erfassen; und
Eingeben des Wärmekartencodes des i-ten Bildframes und des Wärmekartencodes des benachbarten Bildframes in das zeitliche mehrskalige Modell, um die dreidimensionalen Koordinaten der Schlüsselpunkte im i-ten Bildframes zu erfassen.

**2.** Verfahren nach Anspruch 1, wobei das Eingeben der ersten Wärmekarte des i-ten Bildframes und der ersten Wärmekarte des benachbarten Bildframes in das Wärmekartencodiermodell, um den Wärmekartencode des i-ten Bildframes und den Wärmekartencode des benachbarten Bildframes zu erfassen, Folgendes umfasst:

Bestimmen eines eindimensionalen Vektors, der der ersten Wärmekarte des i-ten Bildframes entspricht, unter Verwendung der mindestens einen Faltungsschicht des Wärmekartencodiermodells; und
Erhalten des Wärmekartencodes des i-ten Bildframes gemäß dem eindimensionalen Vektor, der der Wärmekarte des i-ten Bildframes entspricht; und
Bestimmen eines eindimensionalen Vektors, der der ersten Wärmekarte des benachbarten Bildframes entspricht, unter Verwendung der mindestens einen Faltungsschicht des Wärmekartencodiermodells; und
Erhalten des Wärmekartencodes des benachbarten Bildframes gemäß dem eindimensionalen Vektor, der der Wärmekarte des benachbarten Bildframes entspricht.

**3.** Verfahren nach Anspruch 1, wobei das Eingeben des Wärmekartencodes des i-ten Bildframes und des Wärmekartencodes des benachbarten Bildframes in das zeitliche mehrskalige Modell, um die dreidimensionalen Koordinaten der Schlüsselpunkte im i-ten Bildframes zu erfassen, Folgendes umfasst:

Eingeben des Wärmekartencodes des i-ten Bildframes und des Wärmekartencodes des benachbarten Bildframes in mindestens eine Faltungsschicht des zeitlichen mehrskaligen Modells, um ein Faltungsergebnis der mindestens einen Faltungsschicht zu erhalten; und
Erhalten der dreidimensionalen Koordinaten der Schlüsselpunkte im i-ten Bildframe gemäß dem Faltungsergebnis der mindestens einen Faltungsschicht unter Verwendung der mindestens einen vollständig verbundenen Schicht des zeitlichen mehrskaligen Modells.

4. Verfahren nach einem der Ansprüche 1 bis 3, wobei das Erfassen einer ersten Wärmekarte des i-ten Bildframes Folgendes umfasst:

Extrahieren einer Zielregion, in der sich das Zielobjekt im i-ten Bildframe befindet; Anpassen der Zielregion an eine Zielgröße, um eine angepasste Zielregion zu erhalten; und Erhalten der ersten Wärmekarte des i-ten Bildframes gemäß der angepassten Zielregion.

5. Verfahren nach Anspruch 1, wobei das zeitliche mehrskalige Modell eine Vielzahl von Faltungsschichten umfasst, die parallel verbunden sind.

6. Verfahren zum Trainieren eines Modells zur Positionsbestimmung von Schlüsselpunktkoordinaten, das auf eine Computervorrichtung anwendbar ist, wobei das Verfahren Folgendes umfasst:

Erfassen von mindestens einem Satz von Trainingsproben, wobei jede des mindestens einen Satzes von Trainingsproben ein Probevideo und reale zweidimensionale Koordinaten und reale dreidimensionale Koordinaten von Schlüsselpunkten des Probeobjekts im Probevideo umfassen; Detektieren und Verfolgen des Probeobjekts im Probevideo; Erfassen einer ersten Wärmekarte eines Probebildframes für jeden Probebildframe im Probevideo, wobei die erste Wärmekarte des Probebildframes eine Vielzahl von zweiten Wärmekarten umfasst, jede für eine Vielzahl von Schlüsselpunkten, die Schlüsselpunkte dem Probeobjekt im Probebildframe entsprechen und ein Pixelwert eines Pixels in der ersten Wärmekarte eine Wahrscheinlichkeit anzeigt, dass das Pixel ein Schlüsselpunkt ist; Trainieren des Modells zur Positionsbestimmung von Schlüsselpunktkoordinaten unter Verwendung der ersten Wärmekarte von jedem Probebildframe und der realen zweidimensionalen Koordinaten und der realen dreidimensionalen Koordinaten der Schlüsselpunkte, wobei das Modell zur Positionsbestimmung von Schlüsselpunktkoordinaten dazu ausgelegt ist, vorhergesagte dreidimensionale Koordinaten von Schlüsselpunkten in einem Zielprobebildframe gemäß einer ersten Wärmekarte des Zielprobebildframes und einer ersten Wärmekarte eines benachbarten Probebildframes zu bestimmen; und Beenden des Trainierens des Modells zur Positionsbestimmung von Schlüsselpunktkoordinaten in einem Fall, in dem eine Trainingsbeendigungsbedingung erfüllt ist, um ein trainiertes Modell zur Positionsbestimmung von Schlüsselpunktkoordinaten zu erhalten, wobei das Modell zur Positionsbestimmung von Schlüsselpunktkoordinaten ein Wärmekartencodiermodell und ein zeitliches mehrskaliges Modell umfasst, das Wärmekartencodiermodell mindestens eine Faltungsschicht und mindestens eine vollständige Faltungsschicht umfasst und dazu ausgelegt ist, die erste Wärmekarte des Zielprobebildframes und die erste Wärmekarte des benachbarten Bildframes zu verarbeiten, um einen Wärmekartencode des Zielprobebildframes und einen Wärmekartencode des benachbarten Bildframes zu erhalten, und das zeitliche mehrskalige Modell mindestens eine Faltungsschicht und mindestens eine vollständig verbundene Schicht umfasst und dazu ausgelegt ist, den Wärmekartencode des Zielprobebildframes und den Wärmekartencode des benachbarten Bildframes zu verarbeiten, um die dreidimensionalen Koordinaten der Schlüsselpunkte im Zielprobebildframe zu erhalten.

7. Verfahren nach Anspruch 6, wobei das Trainieren des Modells zur Positionsbestimmung von Schlüsselpunktkoordinaten unter Verwendung der ersten Wärmekarte von jedem Probebildframe und der realen zweidimensionalen Koordinaten und der realen dreidimensionalen Koordinaten der Schlüsselpunkte Folgendes umfasst:

Erfassen eines Wertes einer Zielverlustfunktion, wobei der Wert der Zielverlustfunktion gemäß einem Wert einer dreidimensionalen Verlustfunktion, einem Wert einer zweidimensionalen Verlustfunktion, einem Wert einer Diskriminantenverlustfunktion und einem Wert einer Betrachtungswinkelverlustfunktion berechnet wird; und Anpassen eines Parameters des Modells zur Positionsbestimmung von Schlüsselpunktkoordinaten gemäß dem Wert der Zielverlustfunktion.

8. Verfahren nach Anspruch 7, wobei das Erfassen eines Wertes einer Zielverlustfunktion Folgendes umfasst:

Erfassen einer Raumskelettrepräsentation und einer Zeitskelettrepräsentation des Zielprobebildframes gemäß den vorhergesagten dreidimensionalen Koordinaten der Schlüsselpunkte im Zielprobebildframe, wobei die Raumskelettrepräsentation eine Länge eines Skeletts und einen Winkel eines Gelenks, das durch die Schlüsselpunkte im Zielprobebildframe gebildet wird, charakterisiert und wobei die Zeitskelettrepräsentation eine Skelettlängenvariation und eine Gelenkwinkelvariation zwischen dem Zielprobebildframe und dem benachbarten Probebildframe charakterisiert;

Erfassen eines Stellungsrationalitätsvorhersagewertes des Zielprobebildframes gemäß den vorhergesagten dreidimensionalen Koordinaten der Schlüsselpunkte des Zielprobebildframes und der Raumskelettrepräsentation und der Zeitskelettrepräsentation des Zielprobebildframes, wobei der Stellungsrationalitätsvorhersagewert eine Rationalität einer Stellung charakterisiert, die den vorhergesagten dreidimensionalen Koordinaten der Schlüsselpunkte im Zielprobebildframe entspricht; und

Berechnen des Wertes der Diskriminantenverlustfunktion gemäß dem Stellungsrationalitätsvorhersagewert.

9. Verfahren nach Anspruch 8, wobei n Schlüsselpunkte bereitgestellt sind, wobei n eine Ganzzahl größer als 1 ist; und
das Erfassen einer Raumskelettrepräsentation und einer Zeitskelettrepräsentation des Zielprobebildframes gemäß den vorhergesagten dreidimensionalen Koordinaten der Schlüsselpunkte im Zielprobebildframe umfasst Folgendes:

Klassifizieren der n Schlüsselpunkte im Zielprobebildframe in m Gruppen, wobei jede Gruppe zwei benachbarte Schlüsselpunkte umfasst, wobei m eine positive Ganzzahl kleiner als n ist;

Erfassen der Raumskelettrepräsentation des Zielprobebildframes gemäß einer Differenz zwischen vorhergesagten dreidimensionalen Koordinaten von zwei benachbarten Schlüsselpunkten in jeder der m Gruppen; und

Erfassen der Zeitskelettrepräsentation des Zielprobebildframes gemäß der Raumskelettrepräsentation des Zielprobebildframes und einer Raumskelettrepräsentation des benachbarten Probebildframes.

10. Verfahren nach Anspruch 7, wobei die Trainingsprobe Videoproben umfasst, die durch Aufnehmen des Probeobjekts aus verschiedenen Betrachtungswinkeln erhalten werden; und
das Erfassen eines Wertes einer Zielverlustfunktion umfasst Folgendes:

Erhalten von vorhergesagten dreidimensionalen Koordinaten der Schlüsselpunkte aus einem ersten Betrachtungswinkel und von vorhergesagten dreidimensionalen Koordinaten der Schlüsselpunkte aus einem zweiten Betrachtungswinkel durch das Modell zur Positionsbestimmung von Schlüsselpunkten; und

Vergleichen der vorhergesagten dreidimensionalen Koordinaten der Schlüsselpunkte aus dem ersten Betrachtungswinkel mit den vorhergesagten dreidimensionalen Koordinaten der Schlüsselpunkte aus dem zweiten Betrachtungswinkel, um den Wert der Betrachtungswinkelverlustfunktion zu erhalten.

11. Verfahren nach einem der Ansprüche 6 bis 10, das ferner Folgendes umfasst: nach Erfassen von mindestens einem Satz von Trainingsproben,

Aufnullstellen von zweiten Wärmekarten von allen der mehreren Schlüsselpunkte in mindestens einem Probebildframe im Probevideo; oder

Aufnullstellen von zweiten Wärmekarten eines Teils der mehreren Schlüsselpunkte in dem mindestens einen Probebildframe im Probevideo.

12. Stellungserfassungsvorrichtung, die Folgendes umfasst:

ein Videoerfassungsmodul, das dazu ausgelegt ist, ein Zielvideo zu erfassen;

ein Wärmekartenerfassungsmodul, das dazu ausgelegt ist, eine erste Wärmekante eines i-ten Bildframes für den i-ten Bildframe im Zielvideo zu erfassen, wobei die erste Wärmekarte des i-ten Bildframes eine Vielzahl von zweiten Wärmekarten umfasst, jede für einen einer Vielzahl von Schlüsselpunkten, wobei die Schlüsselpunkte einem Zielobjekt im i-ten Bildframe entsprechen, wobei ein Wert eines Pixels in der ersten Wärmekarte eine Wahrscheinlichkeit anzeigt, dass es sich bei dem Pixel um einen Schlüsselpunkt handelt, wobei i eine positive Ganzzahl ist;

ein Koordinatenerfassungsmodul, das dazu ausgelegt ist, dreidimensionale Koordinaten der Schlüsselpunkte im i-ten Bildframe gemäß der ersten Wärmekarte des i-ten Bildframes und einer ersten Wärmekarte eines benachbarten Bildframes unter Verwendung eines Modells zur Positionsbestimmung von Schlüsselpunktkoordinaten zu erhalten; und

ein Stellungserfassungsmodul, das dazu ausgelegt ist, eine Zielstellung des Zielobjekts gemäß den dreidimensionalen Koordinaten der Schlüsselpunkte im i-ten Bildframe zu erfassen, wobei es sich bei der Zielstellung um eine Stellung des Zielobjekts im i-ten Bildframe handelt, wobei

das Modell zur Positionsbestimmung von Schlüsselpunktkoordinaten ein Wärmekartencodiermodell und ein zeitliches mehrskaliges Modell umfasst, das Wärmekartencodiermodell mindestens eine Faltungsschicht und mindestens eine vollständige Faltungsschicht umfasst, das zeitliche mehrskalige Modell mindestens eine Faltungsschicht und mindestens eine vollständig verbundene Schicht umfasst, und das Koordinatenerfassungsmodul ferner zu Folgendem ausgelegt ist

Eingeben der ersten Wärmekarte des i-ten Bildframes und der ersten Wärmekarte des benachbarten Bildframes in das Wärmekartencodiermodell, um den Wärmekartencode des i-ten Bildframes und den Wärmekartencode des benachbarten Bildframes zu erfassen; und

Eingeben des Wärmekartencodes des i-ten Bildframes und des Wärmekartencodes des benachbarten Bildframes in das zeitliche mehrskalige Modell, um die dreidimensionalen Koordinaten der Schlüsselpunkte im i-ten Bildframes zu erfassen.

13. Vorrichtung zum Trainieren eines Modells zur Positionsbestimmung von Schlüsselpunktkoordinaten, die Folgendes umfasst:

ein Probenerfassungsmodul, das dazu ausgelegt ist, mindestens einen Satz von Trainingsproben zu erfassen, wobei jede des mindestens einen Satzes von Trainingsproben ein Probevideo und reale zweidimensionale Koordinaten und reale dreidimensionale Koordinaten von Schlüsselpunkten des Probeobjekts im Probevideo umfassen;

ein Objektdetektionsmodul, das dazu ausgelegt ist, das Probeobjekt im Probevideo zu detektieren und zu verfolgen;

ein Wärmekartenerfassungsmodul, das dazu ausgelegt ist, eine erste Wärmekarte eines Probebildframes für jeden Probebildframe im Probevideo zu erfassen, wobei die erste Wärmekarte des Probebildframes eine Vielzahl von zweiten Wärmekarten umfasst, jede für eine Vielzahl von Schlüsselpunkten, die Schlüsselpunkte dem Probeobjekt im Probebildframe entsprechen, ein Pixelwert eines Pixels in der ersten Wärmekarte eine Wahrscheinlichkeit anzeigt, dass das Pixel ein Schlüsselpunkt ist;

ein Modelltrainingsmodul, das dazu ausgelegt ist, das Modell zur Positionsbestimmung von Schlüsselpunktkoordinaten unter Verwendung der ersten Wärmekarte von jedem Probebildframe und der realen zweidimensionalen Koordinaten und der realen dreidimensionalen Koordinaten der Schlüsselpunkte zu trainieren, wobei das Modell zur Positionsbestimmung von Schlüsselpunktkoordinaten dazu ausgelegt ist, vorhergesagte dreidimensionale Koordinaten von Schlüsselpunkten in einem Zielprobebildframe gemäß einer ersten Wärmekarte des Zielprobebildframes und einer ersten Wärmekarte eines benachbarten Probebildframe ist zu bestimmen; und

ein Trainingsbeendigungsmodul, das dazu ausgelegt ist, das Trainieren des Modells zur Positionsbestimmung von Schlüsselpunktkoordinaten in einem Fall, in dem eine Trainingsbeendigungsbedingung erfüllt ist, zu beenden, um ein trainiertes Modell zur Positionsbestimmung von Schlüsselpunktkoordinaten zu erhalten, wobei das Modell zur Positionsbestimmung von Schlüsselpunktkoordinaten ein Wärmekartencodiermodell und ein zeitliches mehrskaliges Modell umfasst,

das Wärmekartencodiermodell mindestens eine Faltungsschicht und mindestens eine vollständige Faltungsschicht umfasst und dazu ausgelegt ist, die erste Wärmekarte des Zielprobebildframes und die erste Wärmekarte des benachbarten Bildframes zu verarbeiten, um einen Wärmekartencode des Zielprobebildframes und einen Wärmekartencode des benachbarten Bildframes zu erhalten, und

das zeitliche mehrskalige Modell mindestens eine Faltungsschicht und mindestens eine vollständig verbundene Schicht umfasst und dazu ausgelegt ist, den Wärmekartencode des Zielprobebildframes und den Wärmekartencode des benachbarten Bildframes zu verarbeiten, um die dreidimensionalen Koordinaten der Schlüsselpunkte im Zielprobebildframe zu erhalten.

14. Computerprogramm, das mindestens eine Anweisung umfasst, die, wenn das Programm von einem Prozessor ausgeführt wird, den Prozessor veranlasst, das Verfahren nach einem der Ansprüche 1 bis 5 zu implementieren oder das Verfahren nach einem der Ansprüche 6 bis 11 zu implementieren.

15. Computerlesbares Speichermedium, in dem mindestens eine Anweisung gespeichert ist, die, wenn das Programm von einem Prozessor ausgeführt wird, den Prozessor veranlasst, das Verfahren nach einem der Ansprüche 1 bis 5 zu implementieren oder das Verfahren nach einem der Ansprüche 6 bis 11 zu implementieren.

**Revendications**

1. Procédé d'acquisition de pose, applicable à un dispositif informatique, le procédé comprenant les étapes suivantes :

acquérir une vidéo cible ;

pour une i<sup>ème</sup> trame **d'image** dans la vidéo cible, acquérir une première carte thermique de l'i<sup>ème</sup> trame d'image, la première carte thermique de l'i<sup>ème</sup> trame d'image comprenant une pluralité de deuxièmes cartes thermiques destinées chacune à un parmi une pluralité de points clés, les points clés correspondant à un objet cible dans l'i<sup>ème</sup> trame d'image, une valeur d'un pixel dans la première carte thermique indiquant une probabilité que le pixel soit un point clé, $i$ étant un nombre entier positif ;

obtenir des coordonnées tridimensionnelles des points clés dans l'i<sup>ème</sup> trame d'image selon la première carte thermique de l'i<sup>ème</sup> trame d'image et une première carte thermique d'une trame d'image adjacente en utilisant un modèle de positionnement de coordonnées de point clé ; et

acquérir une pose cible de l'objet cible selon les coordonnées tridimensionnelles des points clés dans l'i<sup>ème</sup> trame d'image, la pose cible étant une pose de l'objet cible dans l'i<sup>ème</sup> trame d'image, dans lequel

le modèle de positionnement de coordonnées de point clé comprend un modèle d'encodage de carte thermique et un modèle temporel multi-échelle, le modèle d'encodage de carte thermique comprend au moins une couche convolutive et au moins une couche entièrement convolutive, le modèle temporel multi-échelle comprend au moins une couche convolutive et au moins une couche entièrement connectée, et

l'obtention de coordonnées tridimensionnelles des points clés dans l'i<sup>ème</sup> trame d'image selon la première carte thermique de l'i<sup>ème</sup> trame d'image et une première carte thermique d'une trame d'image adjacente comprend ce qui suit :

entrer la première carte thermique de l'i<sup>ème</sup> trame d'image et la première carte thermique de la trame d'image adjacente dans le modèle d'encodage de carte thermique pour acquérir le code de carte thermique de l'i<sup>ème</sup> trame d'image et le code de carte thermique de la trame d'image adjacente ; et

entrer le code de carte thermique de l'i<sup>ème</sup> trame d'image et le code de carte thermique de la trame d'image adjacente dans le modèle temporel multi-échelle pour acquérir les coordonnées tridimensionnelles des points clés dans l'i<sup>ème</sup> trame d'image.

2. Procédé selon la revendication 1, dans lequel l'entrée de la première carte thermique de l'i<sup>ème</sup> trame d'image et de la première carte thermique de la trame d'image adjacente dans le modèle d'encodage de carte thermique pour acquérir le code de carte thermique de l'i<sup>ème</sup> trame d'image et le code de carte thermique de la trame d'image adjacente comprend ce qui suit :

en utilisant l'au moins une couche convolutive du modèle d'encodage de carte thermique, déterminer un vecteur unidimensionnel correspondant à la première carte thermique de l'i<sup>ème</sup> trame d'image ; et obtenir le code de carte thermique de l'i<sup>ème</sup> trame d'image selon le vecteur unidimensionnel correspondant à la première carte thermique de l'i<sup>ème</sup> trame d'image ; et

en utilisant l'au moins une couche convolutive du modèle d'encodage de carte thermique, déterminer un vecteur unidimensionnel correspondant à la première carte thermique de la trame d'image adjacente ; et obtenir le code de carte thermique de la trame d'image adjacente selon le vecteur unidimensionnel correspondant à la première carte thermique de la trame d'image adjacente.

3. Procédé selon la revendication 1, dans lequel l'entrée du code de carte thermique de l'i<sup>ème</sup> trame d'image et du code de carte thermique de la trame d'image adjacente dans le modèle temporel multi-échelle pour acquérir les coordonnées tridimensionnelles des points clés dans l'i<sup>ème</sup> trame d'image comprend ce qui suit :

entrer le code de carte thermique de l'i<sup>ème</sup> trame d'image et le code de carte thermique de la trame d'image adjacente dans au moins une couche convolutive du modèle temporel multi-échelle pour obtenir un résultat de convolution de l'au moins une couche convolutive ; et obtenir les coordonnées tridimensionnelles des points clés dans l'i<sup>ème</sup> trame d'image selon le résultat de convolution de l'au moins une couche convolutive en utilisant l'au moins une couche entièrement connectée du modèle temporel multi-échelle.

4. Procédé selon l'une des revendications 1 à 3, dans lequel l'acquisition d'une première carte thermique de l'i<sup>ème</sup> trame d'image comprend ce qui suit :

extraire une région cible dans laquelle l'objet cible est situé dans l'i<sup>ème</sup> trame d'image ; ajuster la région cible à une taille cible pour obtenir une région cible ajustée ; et obtenir la première carte thermique de l'i<sup>ème</sup> trame d'image selon la région cible ajustée.

5. Procédé selon la revendication 1, dans lequel le modèle temporel multi-échelle comprend une pluralité de couches convolutives qui sont connectées en parallèle.

6. Procédé pour entraîner un modèle de positionnement de coordonnées de point clé applicable à un dispositif informatique, le procédé comprenant les étapes suivantes :

acquérir au moins un ensemble d'échantillons d'entraînement, chacun du ou des ensembles d'échantillons d'entraînement comprenant un échantillon vidéo, des coordonnées bidimensionnelles réelles et des coordonnées tridimensionnelles réelles de points clés d'un objet échantillon dans l'échantillon vidéo ;

détecter et suivre l'objet échantillon dans l'échantillon vidéo ;

pour chaque trame d'image d'échantillon dans l'échantillon vidéo, acquérir une première carte thermique de la trame d'image d'échantillon, la première carte thermique de la trame d'image d'échantillon comprenant une pluralité de deuxièmes cartes thermiques destinées chacune à un parmi une pluralité de points clés, les points clés correspondant à l'objet échantillon dans la trame d'image d'échantillon, et une valeur de pixel d'un pixel dans la première carte thermique indiquant une probabilité que le pixel soit un point clé ;

entraîner le modèle de positionnement de coordonnées de point clé en utilisant la première carte thermique de chaque trame d'image d'échantillon, les coordonnées bidimensionnelles réelles et les coordonnées tridimensionnelles réelles des points clés, le modèle de positionnement de coordonnées de point clé étant configuré pour déterminer des coordonnées tridimensionnelles de points clés prédites dans une trame d'image d'échantillon cible selon une première carte thermique de la trame d'image d'échantillon cible et une première carte thermique d'une trame d'image d'échantillon adjacente ; et

arrêter l'entraînement du modèle de positionnement de coordonnées de point clé dans le cas où une condition d'arrêt d'entraînement est satisfaite pour obtenir un modèle de positionnement de coordonnées de point clé entraîné, dans lequel le modèle de positionnement de coordonnées de point clé comprend un modèle d'encodage de carte thermique et un modèle temporel multi-échelle,

le modèle d'encodage de carte thermique comprend au moins une couche convolutive et au moins une couche entièrement convolutive, et est configuré pour traiter la première carte thermique de la trame d'image d'échantillon cible et la première carte thermique de la trame d'image adjacente pour obtenir un code de carte thermique de la trame d'image d'échantillon cible et un code de carte thermique de la trame d'image adjacente, et

le modèle temporel multi-échelle comprend au moins une couche convolutive et au moins une couche entièrement connectée, et est configuré pour traiter le code de carte thermique de la trame d'image d'échantillon cible et le code de carte thermique de la trame d'image adjacente pour obtenir les coordonnées tridimensionnelles des points clés dans la trame d'image d'échantillon cible.

7. Procédé selon la revendication 6, dans lequel l'entraînement du modèle de positionnement de coordonnées de point clé en utilisant la première carte thermique de chaque trame d'image d'échantillon, les coordonnées bidimensionnelles réelles et les coordonnées tridimensionnelles réelles des points clés comprend ce qui suit :

acquérir une valeur d'une fonction de perte cible, la valeur de la fonction de perte cible étant calculée selon une valeur d'une fonction de perte tridimensionnelle, une valeur d'une fonction de perte bidimensionnelle, une valeur d'une fonction de perte discriminante, et une valeur d'une fonction de perte d'angle de vue ; et

ajuster un paramètre du modèle de positionnement de coordonnées de point clé selon la valeur de la fonction de perte cible.

8. Procédé selon la revendication 7, dans lequel l'acquisition d'une valeur d'une fonction de perte cible comprend ce qui suit :

acquérir une représentation de squelette spatial et une représentation de squelette de temps de la trame d'image d'échantillon cible selon les coordonnées tridimensionnelles prédites des points clés dans la trame d'image d'échantillon cible, la représentation de squelette spatial caractérisant une longueur d'un squelette et un angle d'une articulation formée par les points clés dans la trame d'image d'échantillon cible, et la représentation de squelette de temps caractérisant une variation de longueur de squelette et une variation d'angle de l'articulation entre la trame d'image d'échantillon cible et la trame d'image d'échantillon adjacente ;

acquérir une valeur prédictive de rationalité de pose de la trame d'image d'échantillon cible selon les coordonnées tridimensionnelles prédites des points clés de la trame d'image d'échantillon cible, la représentation de squelette spatial et la représentation de squelette de temps de la trame d'image d'échantillon cible, la valeur prédictive de rationalité de pose caractérisant la rationalité d'une pose correspondant aux coordonnées tridimensionnelles prédites des points clés dans la trame d'image d'échantillon cible ; et

calculer la valeur de la fonction de perte discriminante selon la valeur prédictive de rationalité de pose.

9. Procédé selon la revendication 8, dans lequel n points clés sont fournis, n étant un nombre entier supérieur à 1 ; et

l'acquisition d'une représentation de squelette spatial et d'une représentation de squelette de temps de la trame d'image d'échantillon cible selon les coordonnées tridimensionnelles prédites des points clés dans la trame d'image d'échantillon cible comprend ce qui suit :

classer les n points clés dans la trame d'image d'échantillon cible dans m groups, chaque groupe comprenant deux points clés adjacents, m étant un nombre entier positif inférieur à n ;

acquérir la représentation de squelette spatial de la trame d'image d'échantillon cible selon une différence entre les coordonnées tridimensionnelles prédites de deux points clés adjacents dans chacun des m groupes ; et

acquérir la représentation de squelette de temps de la trame d'image d'échantillon cible selon la représentation de squelette spatial de la trame d'image d'échantillon cible et une représentation de squelette spatial de la trame d'image d'échantillon adjacente.

10. Procédé selon la revendication 7, dans lequel l'échantillon d'entraînement comprend des échantillons vidéo obtenus en filmant l'objet échantillon sous différents angles de vue ; et

l'acquisition d'une valeur d'une fonction de perte cible comprend ce qui suit :

à travers le modèle de positionnement de coordonnées de point clé, obtenir des coordonnées tridimensionnelles prédites des points clés à partir d'un premier angle de vue et des coordonnées tridimensionnelles prédites des points clés à partir d'un deuxième angle de vue ; et

comparer les coordonnées tridimensionnelles prédites des points clés à partir du premier angle de vue avec les coordonnées tridimensionnelles prédites des points clés à partir du deuxième angle de vue pour obtenir la valeur de la fonction de perte d'angle de vue.

11. Procédé selon l'une des revendications 6 à 10, comprenant en outre les étapes suivantes : après l'acquisition au moins un ensemble d'échantillons d'entraînement,

mettre à zéro les deuxièmes cartes thermiques de tous les points clés multiples dans au moins une trame d'image d'échantillon dans l'échantillon vidéo ; ou

mettre à zéro les deuxièmes cartes thermiques d'une partie des points clés multiples dans l'au moins une trame d'image d'échantillon dans l'échantillon vidéo.

12. Appareil d'acquisition de pose, comprenant :

un module d'acquisition vidéo configuré pour acquérir une vidéo cible ;

un module d'acquisition de carte thermique configuré pour, pour une $i^{ème}$ trame d'image dans la vidéo cible, acquérir une première carte thermique de l'$i^{ème}$ trame d'image, la première carte thermique de l'$i^{ème}$ trame d'image comprenant une pluralité de deuxièmes cartes thermiques destinées chacune à un parmi une pluralité de points clés, les points clés correspondant à un objet cible dans l'$i^{ème}$ trame d'image, une valeur d'un pixel dans la première carte thermique indiquant une probabilité que le pixel soit un point clé, i étant un nombre entier positif ;

un module d'acquisition de coordonnées configuré pour obtenir des coordonnées tridimensionnelles des points clés dans l'$i^{ème}$ trame d'image selon la première carte thermique de l'$i^{ème}$ trame d'image et une première carte thermique d'une trame d'image adjacente en utilisant un modèle de positionnement de coordonnées de point clé ; et

un module d'acquisition de pose configuré pour acquérir une pose cible de l'objet cible selon les coordonnées tridimensionnelles des points clés dans l'$i^{ème}$ trame d'image, la pose cible étant une pose de l'objet cible dans l'$i^{ème}$ trame d'image, dans lequel

le modèle de positionnement de coordonnées de point clé comprend un modèle d'encodage de carte thermique et un modèle temporel multiéchelle, le modèle d'encodage de carte thermique comprend au moins une couche convolutive et au moins une couche entièrement convolutive, le modèle temporel multi-échelle comprend au moins une couche convolutive et au moins une couche entièrement connectée, et

le module d'acquisition de coordonnées est en outre configuré pour

entrer la première carte thermique de l'$i^{ème}$ trame d'image et la première carte thermique de la trame d'image adjacente dans le modèle d'encodage de carte thermique pour acquérir le code de carte thermique de l'i<sup>ème</sup> trame d'image et le code de carte thermique de la trame d'image adjacente ; et

entrer le code de carte thermique de l'i<sup>ème</sup> trame d'image et le code de carte thermique de la trame d'image adjacente dans le modèle temporel multi-échelle pour acquérir les coordonnées tridimensionnelles des points clés dans l'i<sup>ème</sup> trame d'image.

13. Appareil pour entraîner un modèle de positionnement de coordonnées de point clé, comprenant :

un module d'acquisition d'échantillons configuré pour acquérir au moins un ensemble d'échantillons d'entraînement, chacun du ou des ensembles d'échantillons d'entraînement comprenant un échantillon vidéo, des coordonnées bidimensionnelles réelles et des coordonnées tridimensionnelles réelles de points clés d'un objet échantillon dans l'échantillon vidéo ;

un module de détection d'objet configuré pour détecter et suivre l'objet échantillon dans l'échantillon vidéo ;

un module d'acquisition de carte thermique configuré pour, pour chaque trame d'image d'échantillon dans l'échantillon vidéo, acquérir une première carte thermique de la trame d'image d'échantillon, la première carte thermique de la trame d'image d'échantillon comprenant une pluralité de deuxièmes cartes thermiques destinées chacune à un parmi une pluralité de points clés, les points clés correspondant à l'objet échantillon dans la trame d'image d'échantillon, une valeur de pixel d'un pixel dans la première carte thermique indiquant une probabilité que le pixel soit un point clé ;

un module d'entraînement de modèle configuré pour entraîner le modèle de positionnement de coordonnées de point clé en utilisant la première carte thermique de chaque trame d'image d'échantillon, les coordonnées bidimensionnelles réelles et les coordonnées tridimensionnelles réelles des points clés, le modèle de positionnement de coordonnées de point clé étant configuré pour déterminer des coordonnées tridimensionnelles de points clés prédites dans une trame d'image d'échantillon cible selon une première carte thermique de la trame d'image d'échantillon cible et une première carte thermique d'une trame d'image d'échantillon adjacente ; et

un module d'arrêt d'entraînement configuré pour arrêter l'entraînement du modèle de positionnement de coordonnées de point clé dans le cas où une condition d'arrêt d'entraînement est satisfaite pour obtenir un modèle de positionnement de coordonnées de point clé entraîné, dans lequel

le modèle de positionnement de coordonnées de point clé comprend un modèle d'encodage de carte thermique et un modèle temporel multi-échelle,

le modèle d'encodage de carte thermique comprend au moins une couche convolutive et au moins une couche entièrement convolutive, et est configuré pour traiter la première carte thermique de la trame d'image d'échantillon cible et la première carte thermique de la trame d'image adjacente pour obtenir un code de carte thermique de la trame d'image d'échantillon cible et un code de carte thermique de la trame d'image adjacente, et

le modèle temporel multi-échelle comprend au moins une couche convolutive et au moins une couche entièrement connectée, et est configuré pour traiter le code de carte thermique de la trame d'image d'échantillon cible et le code de carte thermique de la trame d'image adjacente pour obtenir les coordonnées tridimensionnelles des points clés dans la trame d'image d'échantillon cible.

14. Programme informatique comprenant au moins une instruction qui, lorsque le programme est exécuté par un processeur, amène le processeur à mettre en œuvre le procédé selon l'une des revendications 1 à 5 ou à mettre en œuvre le procédé selon l'une des revendications 6 à 11.

15. Support de stockage lisible par ordinateur, stockant au moins une instruction qui, lorsqu'elle est exécutée par un processeur, amène le processeur à mettre en œuvre le procédé selon l'une des revendications 1 à 5 ou à mettre en œuvre le procédé selon l'une des revendications 6 à 11.

FIG. 1

| Acquire a target video | 201 |

↓

| Acquire, for an $i^{th}$ image frame in the target video, a first heat map of the $i^{th}$ image frame | 202 |

↓

| Obtain three-dimensional coordinates of key points in the $i^{th}$ image frame according to the first heat map of the $i^{th}$ image frame and a first heat map of an adjacent image frame | 203 |

↓

| Acquire a target pose of the target object according to the three-dimensional coordinates of the key points in the $i^{th}$ image frame | 204 |

FIG. 2

| Acquire a target video | 301 |

↓

| Detect and track a target object in the target video | 302 |

↓

| Extract, for an $i^{th}$ image frame in the target video, a target region in which the target object is located in the $i^{th}$ image frame | 303 |

↓

| Adjust the target region to a target size to obtain an adjusted target region | 304 |

↓

| Obtain a first heat map of the $i^{th}$ image frame according to the adjusted target region | 305 |

↓

| Obtain a heat map code of the $i^{th}$ image frame and a heat map code of an adjacent image frame according to the first heat map of the $i^{th}$ image frame and a first heat map of the adjacent image frame | 306 |

↓

| Obtain the three-dimensional coordinates of the key points in the $i^{th}$ image frame according to the heat map code of the $i^{th}$ image frame and the heat map code of the adjacent image frame | 307 |

↓

| Acquire a target pose of the target object according to the three-dimensional coordinates of the key points in the ith image frame | 308 |

FIG. 3

**FIG. 4**

| 0.05 | 0.12 | 0.11 | 0.12 | 0.11 |
|------|------|------|------|------|
| 0.09 | 0.41 | 0.62 | 0.39 | 0.06 |
| 0.11 | 0.24 | 0.25 | 0.15 | 0.09 |
| 0.10 | 0.42 | 0.25 | 0.20 | 0.11 |
| 0.12 | 0.12 | 0.71 | 0.98 | 0.60 |

**FIG. 5**

| Acquire at least one set of training samples | 601 |

| Detect and track a sample object in a sample video | 302 |

| Acquire a first heat map of each sample image frame in the sample video | 303 |

| Train a key point coordinate positioning model by using the first heat map of each sample image frame and real two-dimensional coordinates and real three-dimensional coordinates of the key points | 304 |

| Stop training the key point coordinate positioning model in a case that a training stop condition is satisfied, to obtain a trained key point coordinate positioning model | 305 |

**FIG. 6**

700

| Video acquisition module | 710 |

| Heat map acquisition module | 720 |

| Coordinate acquisition module | 730 |

| Pose acquisition module | 740 |

**FIG. 7**

**FIG. 8**

**FIG. 9**

900

Sample acquisition
module          910

Object detection
module          920

                                    930
Heat map acquisition                Heat map zeroing
module                              module          960

Model training
module

Loss acquisition unit    941
                                        940

Parameter adjusting
unit            942

Training stop module    950

**FIG. 10**

**FIG. 11**

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911348014

**Non-patent literature cited in the description**

- **CHENG YU et al.** *Occlusion-Aware Networks for 3D Human Pose Estimation in Video*
- **SONG JIE et al.** *Thin-Slicing Network: A Deep Structured Model for Pose Estimation in Videos*
- **MEHTA DUSHYANT et al.** *Monocular 3D Human Pose Estimation in the Wild Using Improved CNN Supervision*